# EUROPEAN PATENT SPECIFICATION

(11) **EP 3 747 303 B1**
(45) Date of publication and mention of the grant of the patent: **02.11.2022**
(21) Application number: 20178563.1
(22) Date of filing: 05.06.2020
(51) Int. Cl.: A44B 11/25

(54) **MAGNETIC BUCKLE ASSEMBLY**
MAGNETISCHE KNICKANORDNUNG
ENSEMBLE BOUCLE MAGNÉTIQUE

(30) Priority: 06.06.2019 CN 201910492826
(43) Date of publication of application: 09.12.2020
(60) Divisional application: 22197355.5
(73) Proprietor: Wonderland Switzerland AG, 6312 Steinhausen (CH)
(72) Inventor: Cheng, Manqun, Dongguan, Guangdong 523648 (CN)
(74) Representative: Pfenning, Meinig & Partner mbB

(56) References cited:
- WO-A2-2008/006356
- US-A1- 2010 308 605
- US-A1- 2016 010 371

## Description

### Field of the Invention

The present invention relates to a magnetic buckle assembly.

### Background of the Invention

With development of the economy and advancement of the technology, there are more and more consumer goods available in the market for bringing convenience in people's life. A child carrier is one of the consumer goods.

It is well-known that a harness system including at least one strap is indispensable for the child carrier to secure a child. The harness system usually includes straps and a buckle assembly. The buckle assembly facilitates a user to attach the straps to each other or detach the straps from each other easily.

Currently, the conventional buckle assembly usually includes a male buckle, a female buckle, a latch and an operating component. The female buckle is for mating with the male buckle. The latch is for restraining separation of the male buckle and the female buckle when the male buckle is mated with the female buckle. The operating component is for driving the latch to allow the separation of the male buckle and the female buckle. However, the male buckle cannot be mated with or separated from the female buckle quickly.

In order to accelerate a mating process of the male buckle and the female buckle, there is a magnetic buckle assembly including two magnetic components for magnetically attracting each other. The two magnetic components are respectively installed on the male buckle and the female buckle, so that the magnetic attracting force generated by the two magnetic components can accelerate a mating process of the male buckle and the female buckle. However, the magnetic attracting force interferes with a separating process of the male buckle and the female buckle.

In order to accelerate the separating process of the male buckle and the female buckle, there is another magnetic buckle assembly including two magnetic components magnetically repelling each other. The two magnetic components are respectively installed on the male buckle and the female buckles, so that a magnetic repelling force generated by the two magnetic components can accelerate the separating process of the male buckle and the female buckle. However, the magnetic repelling force interferes with the mating process of the male buckle and the female buckle

WO 2008/06356 discloses a magnetic buckle assembly.

Therefore, there is a need to provide an improved magnetic buckle assembly which can facilitate not only a mating operation thereof but also a separating process thereof.

### Summary of the Invention

This is mind, the present invention aims at providing a magnetic buckle assembly which can change a direction of a magnetic force of a magnetic component for facilitating not only a mating operation thereof but also a separating operation thereof.

This is achieved by a magnetic buckle assembly according to claim 1. The dependent claims pertain to corresponding further developments and improvements.

As will be seen more clearly from the detail description following below, the claimed magnetic buckle assembly includes at least one first buckle component, a second buckle component, a switch, an operating component, at least one first magnetic component, a second magnetic component and at least one latch. The second buckle component is for mating with the at least one first buckle component. The switch is movably disposed on the second buckle component. The operating component is linked to the switch. The at least one first magnetic component is disposed on the first buckle component. The second magnetic component is disposed on the switch and for magnetically attracting or repelling the at least one first magnetic component. The at least one latch is movably disposed on the second buckle component and for engaging with the at least one first buckle component to prevent separation of the at least one first buckle component and the second buckle component. The at least one latch moves along with movement of the operating component or movement of the switch. The operating component drives the switch to move to change a direction of a magnetic force of the second magnetic component acting on the at least one first magnetic component when the operating component is operated to disengage the at least one latch from the at least one first buckle component.

In summary, the magnetic buckle assembly of the present disclosure utilizes cooperation of the operating component, the switch, the latch, the first magnetic component and the second magnetic component to change the direction of the magnetic force of the second magnetic component acting on the first magnetic component by moving the switch when the operating component is operated to disengage the at least one latch from the first buckle component. Therefore, the first magnetic component and the second magnetic component can be configured to magnetically attract each other when the first buckle component is mated with the second buckle component. The first magnetic component and the second magnetic component can magnetically repel each other when the operating component is operated to disengage the at least one latch from the first buckle component for allowing separation of the first buckle component and the second buckle component, which facilitates not only a mating operation of the magnetic buckle assembly but also a separating operation of the magnetic buckle assembly. Understandably, the first magnetic component and the second magnetic component also can be configured to magnetically repel each other when the first buckle component is mated with the second buckle component, and the first magnetic component and the second magnetic component can magnetically attract each other when the operating component is operated to disengage the at least one latch from the first buckle component, which prevents an unintentional separation of first buckle component and the second buckle component.

### Brief Description of the Drawings

In the following, the invention is further illustrated by way of example, taking reference to the accompanying drawings. Thereof
FIG. 1 is a front view diagram of a magnetic buckle assembly according to some embodiments of the present disclosure,
FIG. 2 is a diagram of the magnetic buckle assembly as a cover of a second buckle component is detached according to some embodiments of the present disclosure,
FIG. 3 is an internal structural diagram of the magnetic buckle assembly according to some embodiments of the present disclosure,
FIG. 4 is a partial diagram of the magnetic buckle assembly according to some embodiments of the present disclosure,
FIG. 5 is an enlarged diagram of an F portion of the magnetic buckle assembly shown in FIG. 4 according to some embodiments of the present disclosure,
FIG. 6 is a partial diagram of the magnetic buckle assembly at another view according to some embodiments of the present disclosure,
FIG. 7 and FIG. 8 are diagrams of the two first magnetic components and the second magnetic component in different states according to some embodiments of the present disclosure,
FIG. 9 is a front view diagram of a magnetic buckle assembly according to some embodiments of the present disclosure,
FIG. 10 is a sectional diagram of the magnetic buckle assembly along a C-C line shown in FIG. 9 according to some embodiments of the present disclosure,
FIG. 11 is a sectional diagram of the magnetic buckle assembly along a D-D line shown in FIG. 9 according to some embodiments of the present disclosure,
FIG. 12 to FIG. 14 are diagrams of the two first magnetic components and the second magnetic component in different states according to some embodiments of the present disclosure,
FIG. 15 is a diagram of the magnetic buckle assembly as two first buckle components are detached according to some embodiments of the present disclosure,
FIG. 16 and FIG. 17 are diagrams of the first buckle component at different views according to some embodiments of the present disclosure,
FIG. 18 is an exploded diagram of the first buckle component according to some embodiments of the present disclosure,
FIG. 19 and FIG. 20 are partial diagrams of the magnetic buckle assembly according to some embodiments of the present disclosure,
FIG. 21 is another partial diagram of the magnetic buckle assembly according to some embodiments of the present disclosure,
FIG. 22 is a partial exploded diagram of the magnetic buckle assembly according to some embodiments of the present disclosure,
FIG. 23 to FIG. 25 are diagrams of the two first magnetic components and the second magnetic component in different states according to another embodiment of the present disclosure,
FIG. 26 to FIG. 28 are diagrams of the two first magnetic components and the second magnetic component in different states according to another embodiment of the present disclosure,
FIG. 29 is a front view diagram of a magnetic buckle assembly according to some embodiments of the present disclosure,
FIG. 30 is a sectional diagram of the magnetic buckle assembly along an E-E line shown in FIG. 29 according to some embodiments of the present disclosure,
FIG. 31 is a sectional diagram of the magnetic buckle assembly along an F-F line shown in FIG. 29 according to some embodiments of the present disclosure,
FIG. 32 is a sectional diagram of the magnetic buckle assembly along a G-G line shown in FIG. 29 according to some embodiments of the present disclosure,
FIG. 33 and FIG. 34 are diagrams of the magnetic buckle assembly at different views as two first buckle components are detached according to some embodiments of the present disclosure,
FIG. 35 is a diagram of the magnetic buckle assembly as the two first buckle components and a cover of a second buckle component are detached according to some embodiments of the present disclosure,
FIG. 36 is an exploded diagram of the magnetic buckle assembly according to some embodiments of the present disclosure,
FIG. 37 is a partial diagram of the magnetic buckle assembly according to some embodiments of the present disclosure,
FIG. 38 is another partial diagram of the magnetic buckle assembly according to some embodiments of the present disclosure,
FIG. 39 is an enlarged diagram of an H portion of the magnetic buckle assembly shown in FIG. 38 according to some embodiments of the present disclosure,
FIG. 40 is a front view diagram of a magnetic buckle assembly according to some embodiments of the present disclosure,
FIG. 41 and FIG. 42 are diagrams of the magnetic buckle assembly at different views as two first buckle components are detached according to some embodiments of the present disclosure,
FIG. 43 is a sectional diagram of the magnetic buckle assembly along an I-I line shown in FIG. 40 according to some embodiments of the present disclosure,
FIG. 44 is a sectional diagram of the magnetic buckle assembly along a J-J line shown in FIG. 40 according to some embodiments of the present disclosure,
FIG. 45 is a sectional diagram of the magnetic buckle assembly along a K-K line shown in FIG. 40 according to some embodiments of the present disclosure,
FIG. 46 and FIG. 47 are internal structural diagrams of the magnetic buckle assembly in different states according to some embodiments of the present disclosure,
FIG. 48 is a diagram of a second buckle component according to some embodiments of the present disclosure,
FIG. 49 is an exploded diagram of the second buckle component according to some embodiments of the present disclosure,
FIG. 50 is a diagram of a magnetic buckle assembly according to some embodiments of the present disclosure,
FIG. 51 is a diagram of the magnetic buckle assembly as two first buckle components are detached according to some embodiments of the present disclosure,
FIG. 52 is a partial diagram of the magnetic buckle assembly according to some embodiments of the present disclosure,
FIG. 53 is a partial exploded diagram of the magnetic buckle assembly according to some embodiments of the present disclosure,
FIG. 54 is another partial diagram of the magnetic buckle assembly according to some embodiments of the present disclosure,
FIG. 55 is a diagram of a latch according to some embodiments of the present disclosure,
FIG. 56 is a schematic diagram of a magnetic buckle assembly according to some embodiments of the present disclosure,
FIG. 57 is a partial diagram of the magnetic buckle assembly according to some embodiments of the present disclosure,
FIG. 58 and FIG. 59 are diagrams of a second buckle component at different views according to some embodiments of the present disclosure,
FIG. 60 is a schematic diagram of a magnetic buckle assembly according to some embodiments of the present disclosure,
FIG. 61 is a diagram of the magnetic buckle assembly as two first buckle components are detached according to some embodiments of the present disclosure,
FIG. 62 and FIG. 63 are partial diagrams of the magnetic buckle assembly at different views according to some embodiments of the present disclosure,
FIG. 64 is another partial diagram of the magnetic buckle assembly according to some embodiments of the present disclosure,
FIG. 65 is a front view diagram of a magnetic buckle assembly according to some embodiments of the present disclosure,
FIG. 66 is a partial diagram of the magnetic buckle assembly as two first buckle components are detached according to some embodiments of the present disclosure,
FIG. 67 and FIG. 68 are partial exploded diagrams of the first buckle component at different views according to some embodiments of the present disclosure,
FIG. 69 is a schematic diagram of a magnetic buckle assembly according to some embodiments of the present disclosure,
FIG. 70 is a diagram of the magnetic buckle assembly as one of first buckle components is detached according to some embodiments of the present disclosure,
FIG. 71 is an exploded diagram of the magnetic buckle assembly according to some embodiments of the present disclosure,
FIG. 72 is a schematic diagram of a magnetic buckle assembly according to some embodiments of the present disclosure,
FIG. 73 is an exploded diagram of the magnetic buckle assembly according to some embodiments of the present disclosure,
FIG. 74 is a sectional diagram of the magnetic buckle assembly according to some embodiments of the present disclosure,
FIG. 75 and FIG. 76 are diagrams of the magnetic buckle assembly at different states according to some embodiments of the present disclosure,
FIG. 77 is a schematic diagram of a magnetic buckle assembly according to some embodiments of the present disclosure,
FIG. 78 is an exploded diagram of the magnetic buckle assembly according to some embodiments of the present disclosure,
FIG. 79 and FIG. 80 are diagrams of the magnetic buckle assembly at different states according to some embodiments of the present disclosure, and
FIG. 81 and FIG. 82 are diagrams of a magnetic buckle assembly according to some embodiments of the present disclosure.

### Detailed Description

In the following detailed description of the preferred embodiments, reference is made to the accompanying drawings which form a part hereof, and in which is shown by way of illustration specific embodiments in which the disclosure may be practiced. In this regard, directional terminology, such as "top," "bottom," "front," "back," etc., is used with reference to the orientation of the Figure(s) being described. The components of the present disclosure can be positioned in a number of different orientations. As such, the directional terminology is used for purposes of illustration and is in no way limiting. Accordingly, the drawings and descriptions will be regarded as illustrative in nature and not as restrictive.

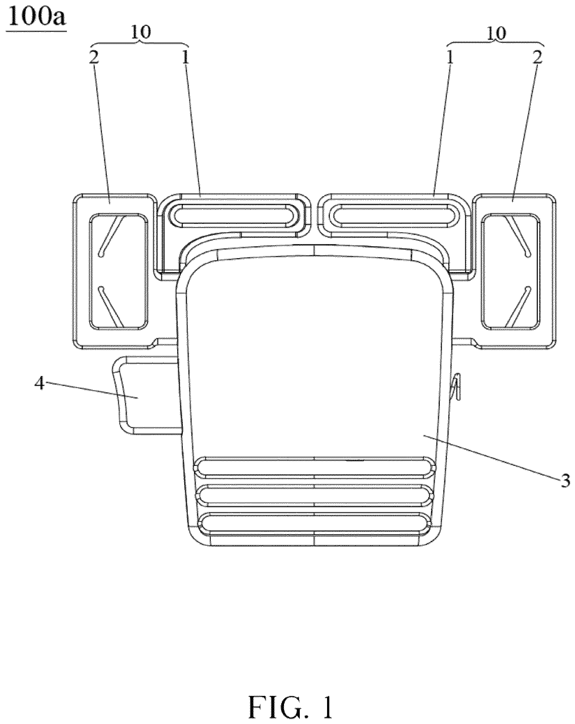

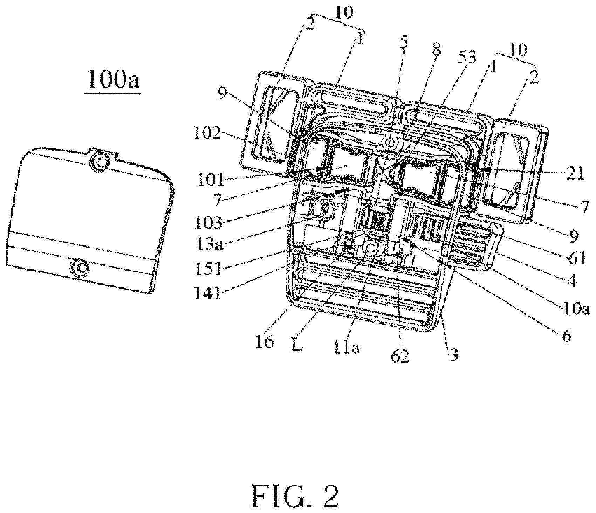

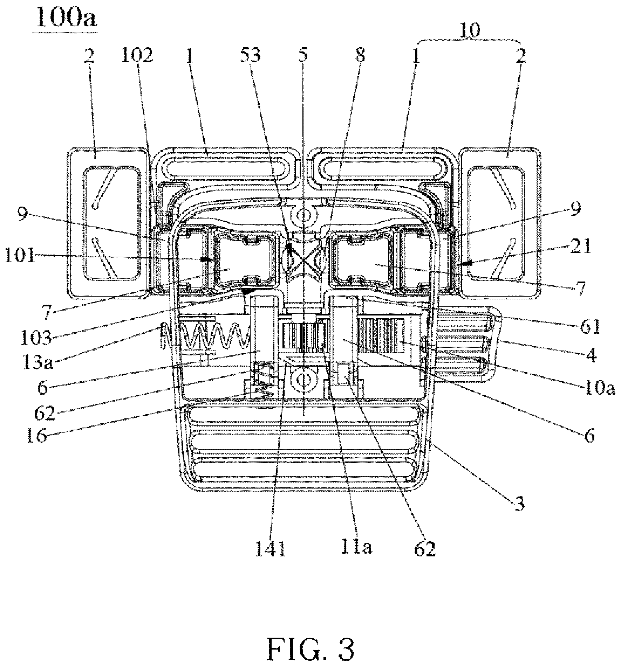

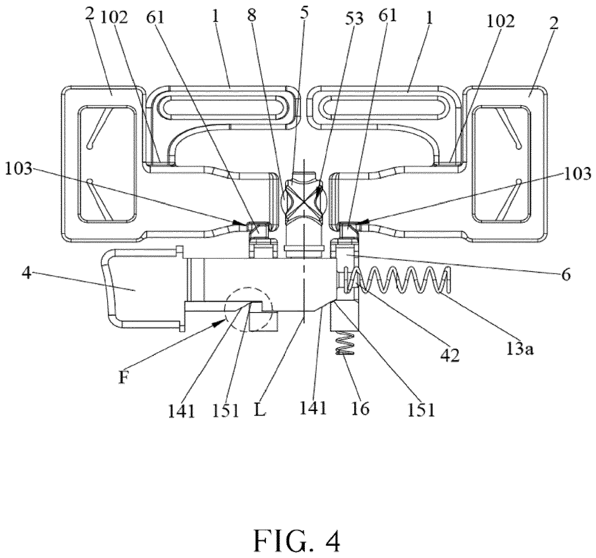

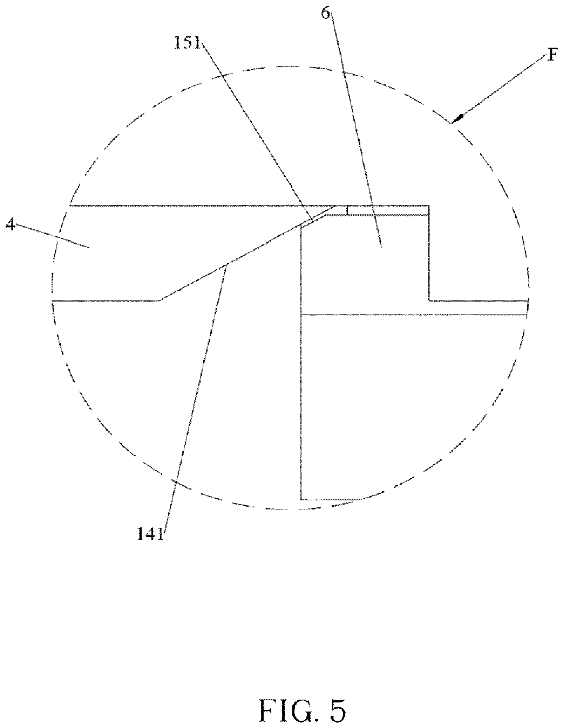

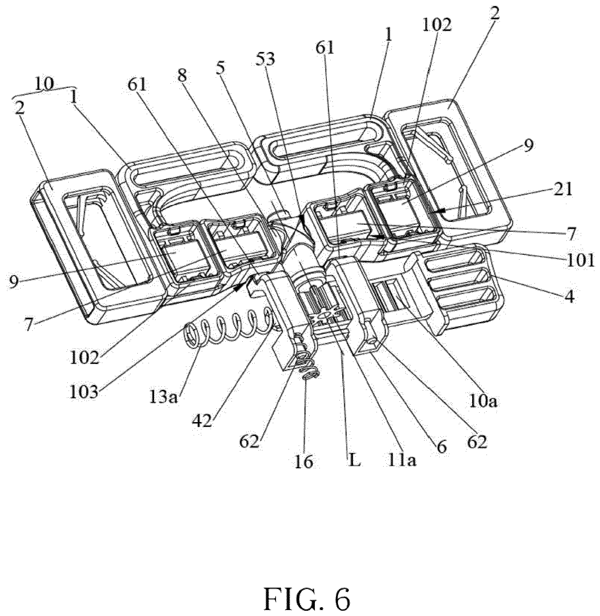

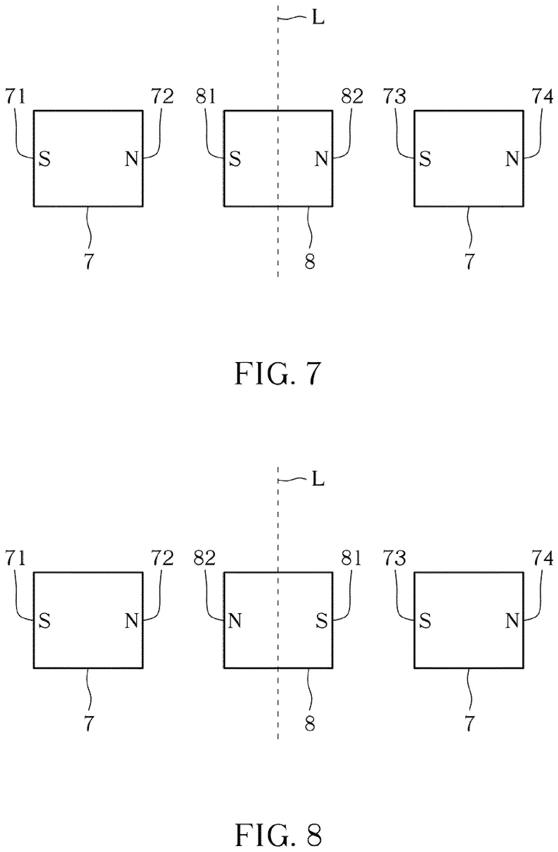

Please refer to FIG. 1 to FIG. 8. FIG. 1 is a front view diagram of a magnetic buckle assembly 100a according to some embodiments of the present disclosure. FIG. 2 is a diagram of the magnetic buckle assembly 100a as a cover of a second buckle component 3 is detached according to some embodiments of the present disclosure. FIG. 3 is an internal structural diagram of the magnetic buckle assembly 100a according to some embodiments of the present disclosure. FIG. 4 is a partial diagram of the magnetic buckle assembly 100a according to some embodiments of the present disclosure. FIG. 5 is an enlarged diagram of an F portion of the magnetic buckle assembly 100a shown in FIG. 4 according to some embodiments of the present disclosure. FIG. 6 is a partial diagram of the magnetic buckle assembly 100a at another view according to some embodiments of the present disclosure. FIG. 7 and FIG. 8 are diagrams of the two first magnetic components 7 and the second magnetic component 8 in different states according to some embodiments of the present disclosure. As shown in FIG. 1 to FIG. 6, the magnetic buckle assembly 100a includes two first buckle components 10, the second buckle component 3, two latches 6, a switch 5, an operating component 4, two first magnetic components 7 and a second magnetic component 8.

The second buckle component 3 is for mating with the two first buckle components 10. The switch 5 is rotatably disposed on the second buckle component 3 around a rotating axis L and linked to the operating component 4. The second magnetic component 8 is disposed on the switch 5. Each first magnetic component 7 is disposed on the corresponding first buckle component 10 for magnetically attracting or repelling the second magnetic component 8. Each latch 6 is movably disposed on the second buckle component 3 and linked to the operating component 4 for engaging with the first buckle component 10 to prevent separation of the corresponding first buckle component 10 and the second buckle component 3 when the corresponding first buckle component 10 is mated with the second buckle component 3. The operating component 4 is movably disposed on the second buckle component 3 for driving the switch 5 and the two latches 6 to move at the same time. In detail, the operating component 4 drives the two latches 6 to move to allow the separation of the two first buckle components 10 and the second buckle component 3 when the operating component 4 is operated to drive the switch 5 to rotate around the rotating axis L to reverse a direction of a magnetic field of the second magnetic component 8.

Specifically, the two first buckle components 10 are arranged symmetrically along the rotating axis L, and each first buckle component 10 can include a shoulder strap buckle 1 and a waist strap buckle 2. Each shoulder strap buckle 1 is assembled with the corresponding waist strap buckle 2 to form a male buckle. The second buckle component 3 can be a crotch strap buckle which is a female buckle for mating with the each male buckle formed by the corresponding shoulder strap buckle 1 and the corresponding waist strap buckle 2 along a lateral direction of the magnetic buckle assembly 100a. The switch 5 is rotatably disposed on the second buckle component 3, i.e., the crotch strap buckle, around the rotating axis L. Each latch 6 and the operating component 4 can be movably disposed on the second buckle component 3, i.e., the crotch strap buckle, and linked to the each other. The two first magnetic components 7 are respectively embedded into the two waist strap buckles 2 and are arranged symmetrically along the rotating axis L. The second magnetic component 8 can magnetically attract or repel each first magnetic component 7 to facilitate a mating operation or a separating operation of the corresponding male buckle, which is formed by the corresponding waist strap buckle 1 and the corresponding shoulder strap buckle 2, and the female buckle, which is the crotch strap buckle, i.e., a mating operation or a separating operation of the corresponding first buckle component 10 and the second buckle component 3.

However, the present disclosure is not limited to the aforementioned embodiments. For example, in another embodiment, each shoulder strap buckle can be integrated with the corresponding waist strap buckle to form a one-piece male buckle, and the two first magnetic components can be respectively embedded into on the two one-piece male buckles.

Alternatively, in another embodiment, the crotch strap buckle can be a male buckle, and the two shoulder strap buckles and the two waist strap buckles can be integrally formed with each other to form a one-piece female buckle for mating with the crotch strap buckle, i.e., there can be only one first buckle component which is the one-piece female buckle. Furthermore, the switch can be rotatably disposed on the one-piece female buckle, and the operating component and the latch can be movably disposed on the one-piece female buckle. Besides, there can be only one first magnetic component embedded into the crotch strap buckle and one second magnetic component embedded into the switch for magnetically attracting or repelling the first magnetic component.

In some embodiments, the two first magnetic components 7 and the second magnetic component 8 can be permanent magnets. However, the present disclosure is not limited to the aforementioned embodiments. For example, in another embodiment, the first magnetic component or the second magnetic component can be electromagnets.

In some embodiments, the switch 5 can be a rotator, or any other similar switching component conceivable by those skilled in the art. In some embodiments, the latch 6 can be a lock, or any other similar latching component conceivable by those skilled in the art.

As shown in FIG. 2, FIG. 3 and FIG. 6, the magnetic buckle assembly 100a further includes two third magnetic components 9. Each third magnetic component 9 is embedded into the corresponding shoulder strap buckle 1 and for magnetically attracting the corresponding first magnetic component 7 embedded into the corresponding waist strap buckle 2 to secure a connection of the corresponding shoulder strap buckle 1 and the corresponding waist strap buckle 2, which makes the connection of the corresponding shoulder strap buckle 1 and the corresponding waist strap buckle 2 more reliable. In some embodiments, the two third magnetic components 9 can be permanent magnets. However, the present disclosure is not limited the aforementioned embodiments. For example, in another embodiment, the third magnetic component can be replaced by a magnetic conductive component, which can be made of iron, cobalt, nickel, gadolinium or alloy thereof, or any other magnetic conductive material. Furthermore, in another embodiment, there can be only one third magnetic component.

Furthermore, in some embodiments, each first magnetic component 7 can be aligned with the corresponding third magnetic component 9 along the lateral direction of the magnetic buckle assembly 100a when the corresponding shoulder strap buckle 1 is assembled with the corresponding waist strap buckle 2, which ensures a secured connection of the corresponding shoulder strap buckle 1 and the corresponding waist strap buckle 2. However, the present disclosure is not limited to the aforementioned embodiments. For example, in another embodiment, each first magnetic component can be aligned with the corresponding third magnetic component along a front-rear direction of the magnetic buckle assembly.

As shown in FIG. 3, FIG. 4 and FIG. 6, each shoulder strap buckle 1 is stacked above the corresponding waist strap buckle 2 along the front-rear direction of the magnetic buckle assembly 100a. When each shoulder strap buckle 1 is stacked above the corresponding waist strap buckle 2, each shoulder strap buckle 1 can be aligned with the waist strap buckle 2 along the lateral direction of the magnetic buckle assembly 100a, so that the two first buckle components 10 can be mated with the second buckle component 3 more easily without any interference. Specifically, an engaging portion 21 is formed on each waist strap buckle 2. An engaging arm 102 protrudes from each shoulder strap buckle 1 for engaging with the engaging portion 21, and an outline of each engaging arm 102 matches with an outline of the corresponding engaging portion 21. Each shoulder strap buckle 1 can be aligned with the corresponding waist strap buckle 2 along the lateral direction of the magnetic buckle assembly 100a by embedding the corresponding engaging arm 102 into the corresponding engaging portion 21. In some embodiments, the engaging portion 21 can be a recess structure formed on a rear surface of each waist strap buckle 2. However, the present disclosure is not limited to the aforementioned embodiments.

As shown in FIG. 2 and FIG. 3, each first magnetic component 7 can be configured to magnetically attract the second magnetic component 8 during the mating process of the corresponding first buckle component 10 and the second buckle component 3. The operating component 4 can drive the switch 5 to rotate to reverse orientation of the second magnetic component 8 so as to reverse the direction of the magnetic field of the second magnetic component 8 when the operating component 4 is operated to slide, which enables the reversed second magnetic component 8 to magnetically repel the two first magnetic components 7.

Besides, the operating component 4 drives the each latch 6 to disengage from the corresponding first buckle component 10 to allow the separation of the corresponding first buckle component 10 and the second buckle component 3 when the operating component 4 is operated. Therefore, a magnetic repelling force generated by each first magnetic component 7 and the second magnetic component 8 can facilitate each first buckle component 10 to be separated from the second buckle component 3 once the separation of each first buckle component 10 and the second buckle component 3 is allowed, which achieves a purpose of quick mating and separation of each first buckle component 10 and the second buckle component 3.

As shown in FIG. 7 and FIG. 8, specifically, in some embodiments, a first end 71 and a second end 72 of the left first magnetic component 7 can be respectively a south pole (S) and a north pole (N), a first end 73 and a second end 74 of a right one of the right first magnetic component 7 can be respectively a south pole (S) and a north pole (N), and a first end 81 and a second end 82 of the second magnetic component 8 can be respectively be a south pole (S) and a north pole (N). When the operating component 4 is released, the two first magnetic components 7 and the second magnetic component 8 are located at positions as shown in FIG. 7, so that the first end 81 and the second end 82 of the second magnetic component 8 can respectively magnetically attract the second end 72 of the left first magnetic component 7 and the first end 73 of the right first magnetic component 7. When the operating component is operated to slide, the second magnetic component 8 can be driven to rotated by 180 degrees to be located at a position as shown in FIG. 8 around the rotating axis L, so that magnetic poles of the second magnetic component 8 is reversed, i.e., a direction of a magnetic field of the second magnetic component 8 is reversed. At this moment, the first end 81 and the second end 82 of the second magnetic component 8 can respectively magnetically repel the first end 73 of the right first magnetic component 7 and the second end 72 of the left first magnetic component 7. In detailed, during the rotation of the second magnetic component 8 around the rotating axis L, a magnetic attracting force of the second magnetic component 8 acting on the two first magnetic components 7 decreases, and a magnetic repelling force of the second magnetic component 8 acting on the two first magnetic components 7 increases. A resultant magnetic force of the second magnetic component 8 acting on the two first magnetic components 7 is changed from the magnetic attracting force to the magnetic repelling force when the second magnetic component 8 or the switch 5 is rotated over 90 degrees around the rotating axis L.

However, the configurations of the first magnetic component and the second magnetic component are not limited to the aforementioned embodiments. In another embodiment, the first magnetic component can be configured to magnetically repel the second magnetic component during the mating process of the first buckle component and the second buckle component. The operating component can drive the switch to rotate to reverse orientation of the second magnetic component so as to enable the reversed second magnetic component to magnetically attract the first magnetic component when the operating component is operated to slide, which prevents an unintentional separation of first buckle component and the second buckle component. A resultant magnetic force of the second magnetic component acting on the first magnetic component is changed from a magnetic repelling force to a magnetic attracting force when the second magnetic component or the switch is rotated over 90 degrees around the rotating axis L.

As shown in FIG. 2 to FIG. 6, the operating component 4 is movably connected to the switch 5. Specifically, the operating component 4 is slidably disposed on the second buckle component 3. The operating component 4 drives the switch 5 to rotate around the rotating axis L when the operating component 4 is operated to slide relative to the second buckle component 3. In some embodiments, a sliding direction of the operating component 4 can be parallel to the lateral direction of the magnetic buckle assembly 100a, and the rotating axis L can be perpendicular to the lateral direction and the front-rear direction of the magnetic buckle assembly 100a. In some embodiments, the operating component 4 can be a push button slidably disposed on a lateral wall of the second buckle component 3, so that the operating component 4 is hardly visible for preventing an unintentional touch of a child to enhance safety.

Specifically, a driving structure 10a is formed on the operating component 4. A driven structure 11a is formed on the switch 5 for cooperating with the driving structure 10a, and the operating component 4 drives the switch 5 to rotate around the rotating axis L by cooperation of the driving structure 10a and the driven structure 11a. In some embodiments, the driving structure 10a can be a gear rack structure arranged along the sliding direction of the operating component 4, and the driven structure 11a can be a gear wheel structure for rotatably engaging with the gear rack structure. The rotating axis L can coincide with a central axis of the gear wheel structure, and the gear wheel structure is located at an end portion of the switch 5. Therefore, when the operating component 4 is operated to slide, the operating component 4 drives the switch 5 to rotate around the rotating axis L by cooperation of the gear rack structure and the gear wheel structure to reverse the direction of the magnetic field of the second magnetic component 8 to change the direction of the magnetic force of the second magnetic component 8 acting on the two first magnetic components 7.

As shown in FIG. 2, FIG. 3 and FIG. 6, a hollow structure 53 is formed on the switch 5, and the second magnetic component 8 is embedded into the hollow structure 53. Similarly, an embedding chamber 101 is formed on each first buckle component 10. Each first magnetic component 7 is embedded into the corresponding embedding chamber 101. Specifically, each embedding chamber 101 is formed on the corresponding waist strap buckle 2, and each embedding chamber 101 is aligned with the hollow structure 53 along a mating direction of the corresponding first buckle component 10 and the second buckle component 3, so that a magnetic force can be substantially parallel to the mating direction or a separation direction of the corresponding first buckle component 10 and the second buckle component 3 for facilitating the mating or the separation of the corresponding first buckle component 10 and the second buckle component 3.

As shown in FIG. 2, FIG. 3 and FIG. 6, the magnetic buckle assembly 100a further includes a first resilient component 13a for driving the operating component 4 to recover. Specifically, the first resilient component 13a is disposed between the operating component 4 and the second buckle component 3. In some embodiments, the first resilient component 13a can be an elastic spring. However, the present disclosure is not limited thereto. Furthermore, a guiding portion 42 is formed on the operating component 4 for resiliently deforming the first resilient component 13a, and the first resilient component 13a is sheathed on the guiding portion 42, which makes deformation and recovery of the first resilient component 13a more stable and accelerates the recovery of the first resilient component 13a.

As shown in FIG. 3 to FIG. 6, a locking structure 61 is formed on each latch 6, and a locked structure 103 is formed on each first buckle component 10 and for cooperating with the corresponding locking structure 61. Since each latch 6 is slidably disposed on the second buckle component 3, each locking structure 61 engages with or disengages from the corresponding locked structure 103 in a slidable manner. Specifically, the locked structure 103 is formed on each waist strap buckle 2. However, the present disclosure is not limited to the aforementioned embodiments. For example, the locked structure can be formed on the shoulder strap buckle. Alternatively, there can be only one locking structure.

Specifically, a driven cooperating structure 151 is formed on each latch 6, and two driving cooperating structures 141 are formed on the operating component 4 for cooperating with the driven cooperating structures 151 of the two latches 6. The operating component 4 drives each latch 6 to slide by cooperation of the corresponding driving cooperating structure 141 and the corresponding driven cooperating structure 151 to disengage the corresponding locking structure 61 from the corresponding locked structure 103 when the operating component 4 is operated to slide. In some embodiments, each driving cooperating structure 141 can be a first inclined surface structure formed on the operating component 4 and inclined relative to a sliding direction of the corresponding latch 6, and each driven cooperating structure 151 can be a second inclined surface structure. The operating component 4 drives each latch 6 to slide by cooperation of the corresponding first inclined surface structure and the corresponding second inclined surface structure to disengage the corresponding locking structure 61 from the corresponding locked structure 103 when the operating component 4 is operated to slide. However, the numbers of the driving cooperating structure and the driven cooperating structure are not limited to the aforementioned embodiments. It depends on practical demands. For example, in another embodiment, if there is only one latch with one driven cooperating structure, there can be only one driving cooperating structure formed on the operating component accordingly.

As shown in FIG. 3 to FIG. 6, the magnetic buckle assembly 100a further includes two second resilient components 16 for driving the two latches 6 to recover. Specifically, each second resilient component 16 is disposed between the corresponding latch 6 and the second buckle component 3 to bias the locking structure 61 to engage with the locked structure 103. In some embodiments, the second resilient component 16 can be an elastic spring. However, the number and the configuration of the second resilient component 16 are not limited to the aforementioned embodiments. For example, in another embodiment, if there is only one latch, there can be only one second resilient component 16 accordingly.

Furthermore, a guiding structure 62 is formed on each latch 6 for resiliently deforming the corresponding second resilient component 16, and each second resilient component 16 is sheathed on the corresponding guiding structure 62, which makes deformation and recovery of each second resilient component 16 more stable.

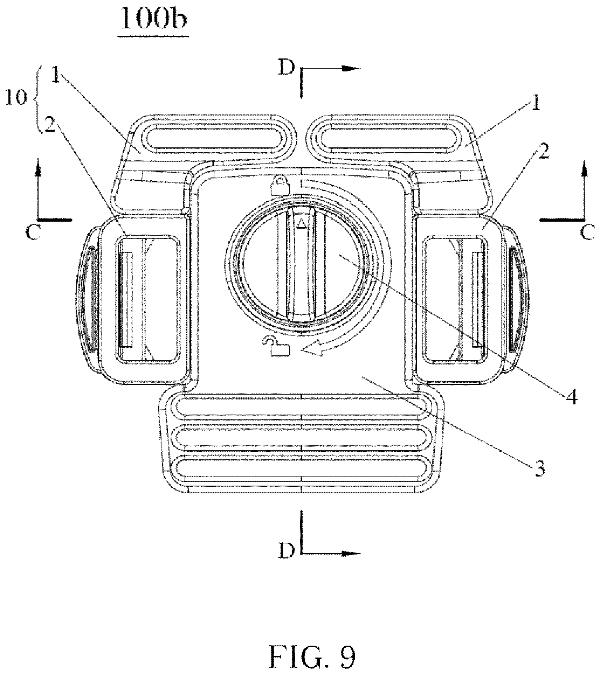

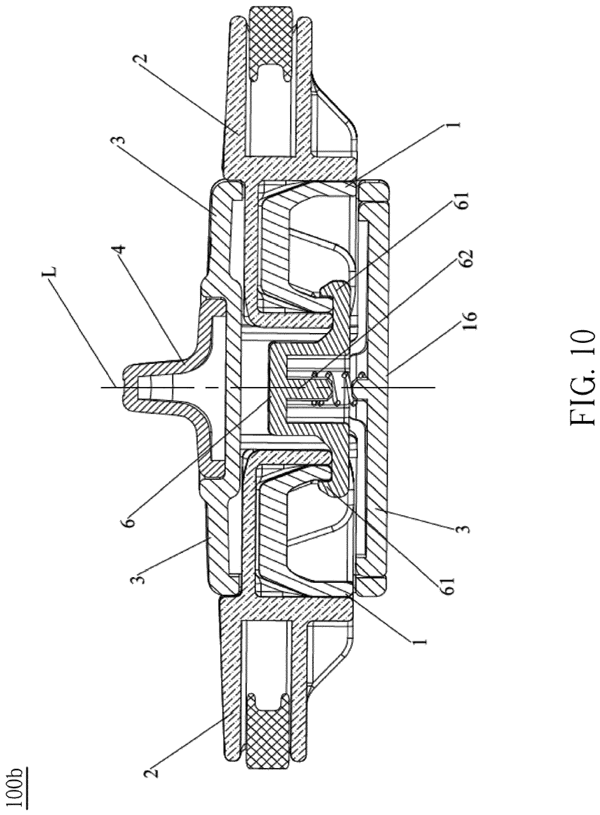

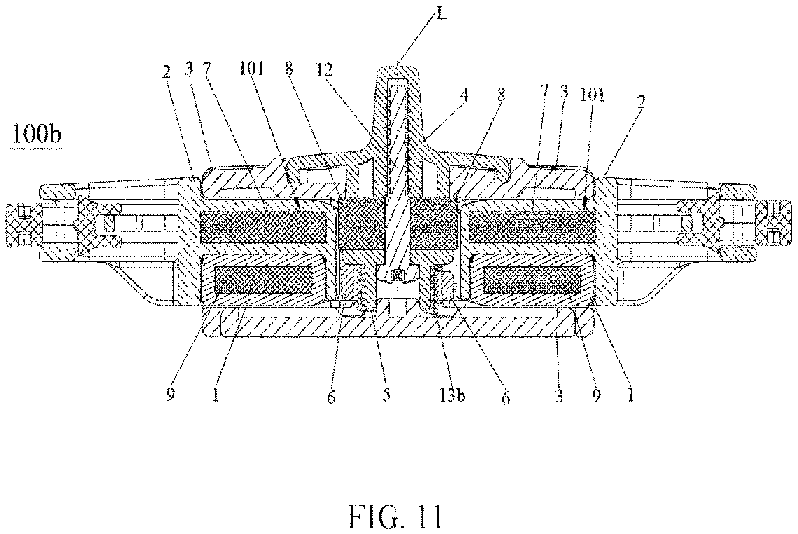

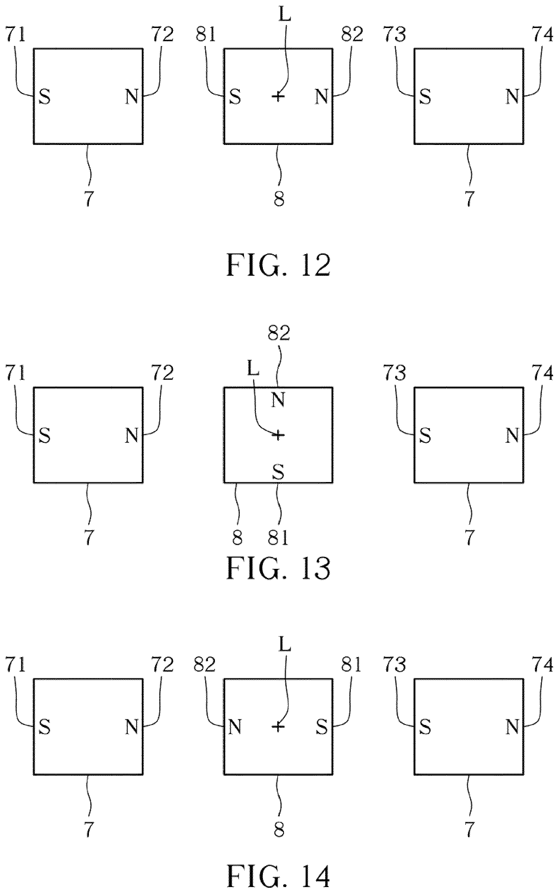

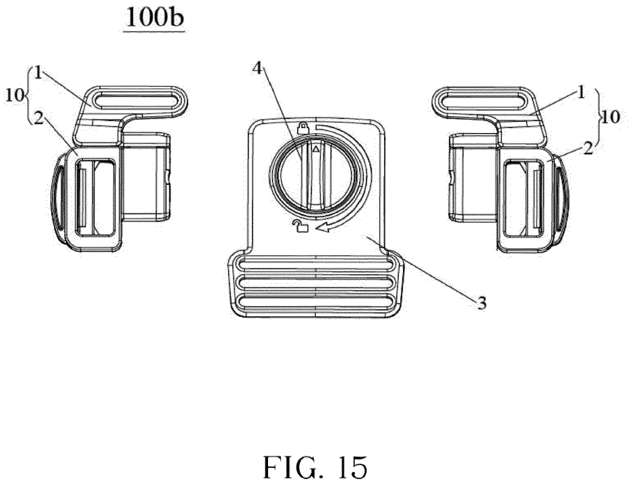

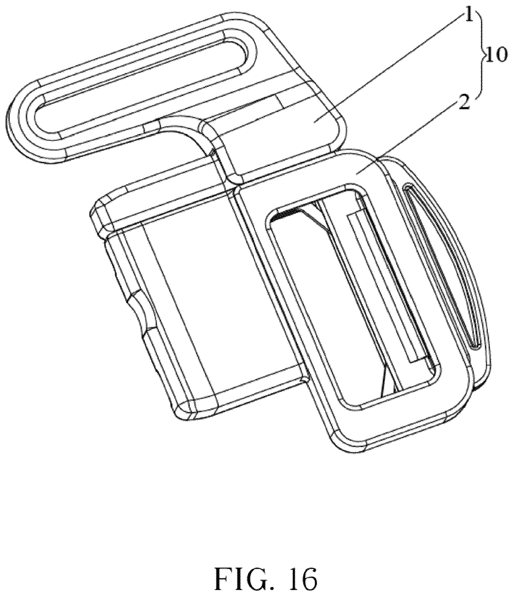

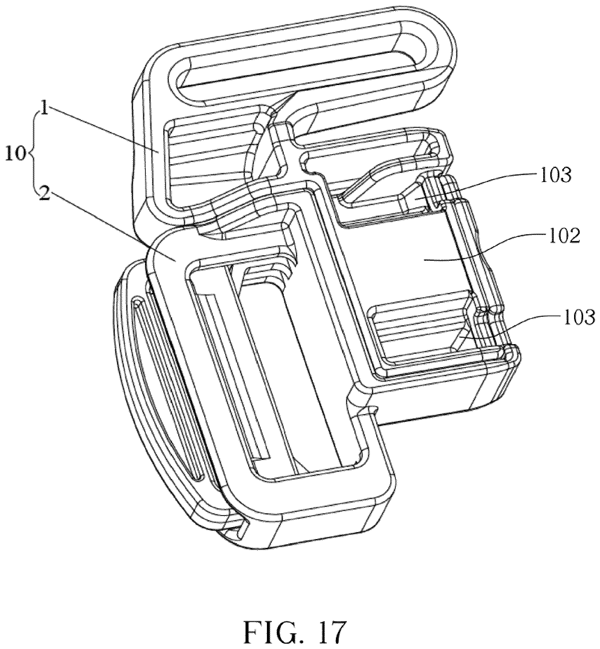

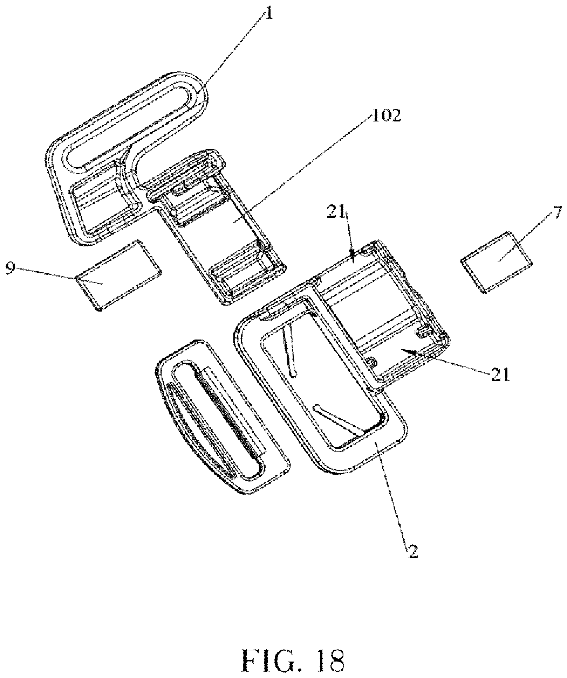

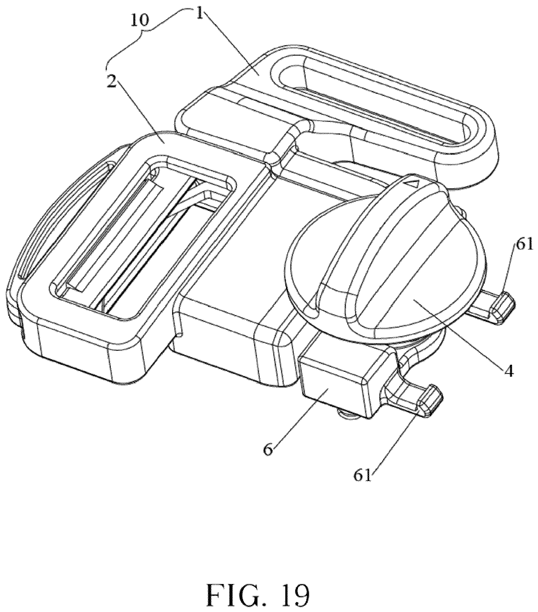

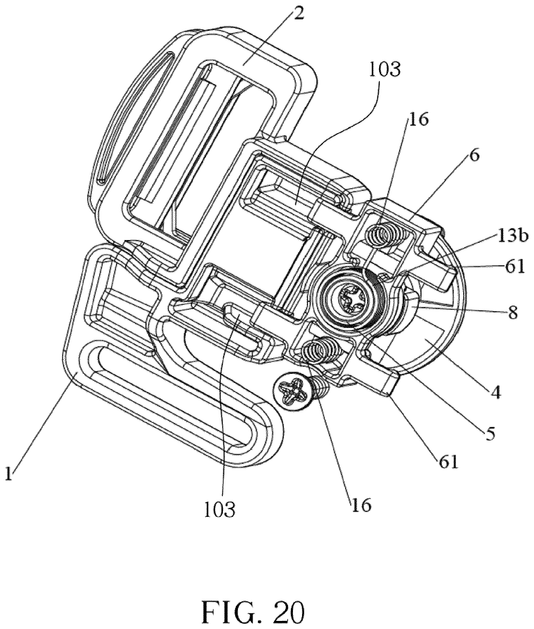

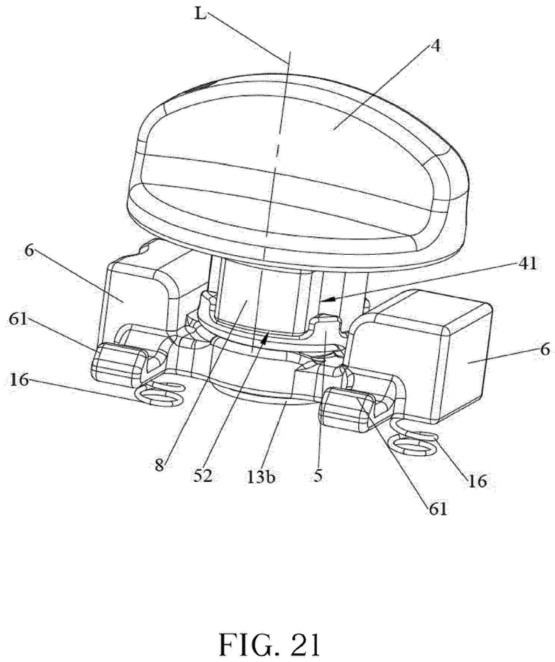

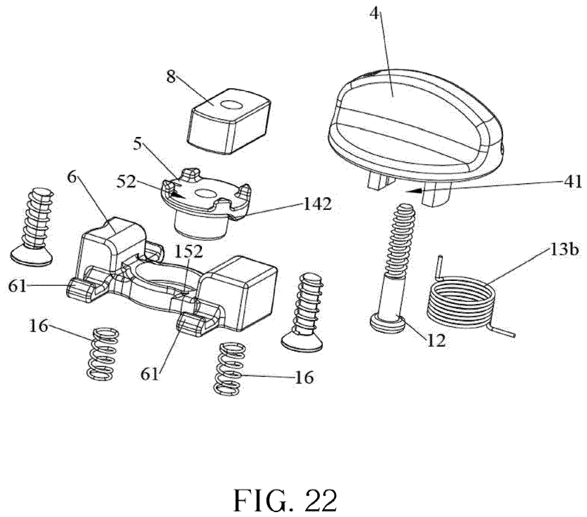

Please refer to FIG. 9 to FIG. 22. FIG. 9 is a front view diagram of a magnetic buckle assembly 100b according to some embodiments of the present disclosure. FIG. 10 is a sectional diagram of the magnetic buckle assembly 100b along a C-C line shown in FIG. 9 according to some embodiments of the present disclosure. FIG. 11 is a sectional diagram of the magnetic buckle assembly 100b along a D-D line shown in FIG. 9 according to some embodiments of the present disclosure. FIG. 12 to FIG. 14 are diagrams of the two first magnetic components 7 and the second magnetic component 8 in different states according to some embodiments of the present disclosure. FIG. 15 is a diagram of the magnetic buckle assembly 100b as the two first buckle components 10 are detached according to some embodiments of the present disclosure. FIG. 16 and FIG. 17 are diagrams of the first buckle component 10 at different views according to some embodiments of the present disclosure. FIG. 18is an exploded diagram of the first buckle component 10 according to some embodiments of the present disclosure. FIG. 19 and FIG. 20 are partial diagrams of the magnetic buckle assembly 100b according to some embodiments of the present disclosure. FIG. 21 is another partial diagram of the magnetic buckle assembly 100b according to some embodiments of the present disclosure. FIG. 22 is a partial exploded diagram of the magnetic buckle assembly 100b according to some embodiments of the present disclosure. The difference between the magnetic buckle assembly 100a and the magnetic buckle assembly 100b is provided as follows.

Firstly, as shown in FIG. 10, FIG. 11 to FIG. 14, in some embodiments, the rotating axis L is arranged along a front-rear direction of the magnetic buckle assembly 100b. On the other hand, in some embodiments, the rotating axis L is arranged along a direction perpendicular to the lateral direction and the front-rear direction of the magnetic buckle assembly 100a.

As shown in FIG. 12 to FIG. 14, specifically, in some embodiments, the first end 71 and the second end 72 of the left first magnetic components 7 can be respectively a south pole (S) and a north pole (N), the first end 73 and the second end 74 of the right first magnetic component 7 can be respectively a south pole (S) and a north pole (N), and the first end 81 and the second end 82 of the second magnetic component 8 can be respectively be a south pole (S) and a north pole (N). When the operating component 4 is released, the two first magnetic components 7 and the second magnetic component 8 are located at positions as shown in FIG. 12, so that the first end 81 and the second end 82 of the second magnetic component 8 can respectively magnetically attract the second end 72 of the left first magnetic component 7 and the first end 73 of the right first magnetic component 7. When the operating component is operated to slide, the second magnetic component 8 can be driven to rotated by 180 degrees to be located at a position as shown in FIG. 14 around the rotating axis L, so that magnetic poles of the second magnetic component 8 is reversed, i.e., a direction of a magnetic field of the second magnetic component 8 is reversed. At this moment, the first end 81 and the second end 82 of the second magnetic component 8 can respectively magnetically repel the first end 73 of the right first magnetic component 7 and the second end 72 of the left first magnetic component 7. In detailed, during the rotation of the second magnetic component 8 around the rotating axis L from the position as shown in FIG. 12 to the position as shown in FIG. 14, the magnetic attracting force of the second magnetic component 8 acting on the two first magnetic components 7 decreases, and the magnetic repelling force of the second magnetic component 8 acting on the two first magnetic components 7 increases. The resultant magnetic force of the second magnetic component 8 acting on the two first magnetic components 7 is changed from the magnetic attracting force to the magnetic repelling force when the second magnetic component 8 or the switch 5 is rotated over 90 degrees around the rotating axis L, i.e., the second magnetic component 8 is rotated over a position as shown in FIG. 13.

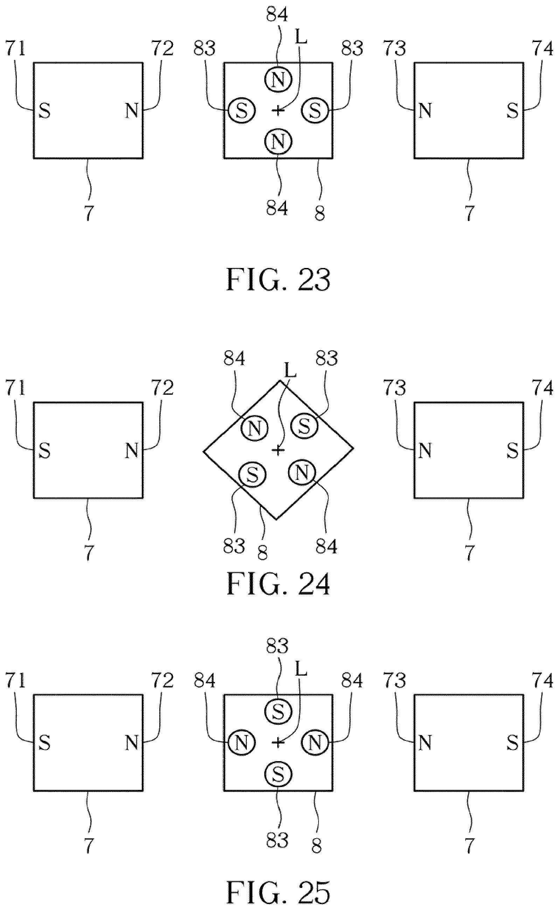

However, the present disclosure is not limited to the aforementioned embodiments. Please refer to FIG. 23 to FIG. 25. FIG. 23 to FIG. 25 are diagrams of the two first magnetic components 7 and the second magnetic component 8 in different states according to another embodiment of the present disclosure. As shown in FIG. 23 to FIG. 25, in some embodiments, the first end 71 and the second end 72 of the left first magnetic component 7 can be respectively a south pole (S) and a north pole (N), and the first end 73 and the second end 74 of the right first magnetic component 7 can be respectively a north pole (N) and a south pole (S). The second magnetic component 8 can be arranged with two attracting portions 83 opposite to each other and two repelling portions 84 opposite to each other. A line between the two attracting portions 83 can be perpendicular to a line between the two repelling portions 84. The two attracting portions 83 and the two repelling portions 84 can be two south poles (S) and two north poles (N). When the operating component 4 is released, the two first magnetic components 7 and the second magnetic component 8 are located at positions as shown in FIG. 23, so that the attracting portions 83 of the second magnetic component 8 located at 3 and 9 o'clock directions can respectively magnetically attract the second end 72 of the left first magnetic component 7 and the first end 73 of the right first magnetic component 7. When the operating component is operated to slide, the second magnetic component 8 can be driven to rotated by 90 degrees to be located at a position as shown in FIG. 25 around the rotating axis L, so that a direction of a magnetic force of the second magnetic component 8 acting on the two first magnetic components 7 is changed. At this moment, the repelling portions 84 of the second magnetic component 8 can respectively magnetically repel the first end 73 of the right first magnetic component 7 and the second end 72 of the left first magnetic component 7. In detailed, during the rotation of the second magnetic component 8 around the rotating axis L from the position as shown in FIG. 23 to the position as shown in FIG. 25, the magnetic attracting force of the second magnetic component 8 acting on the two first magnetic components 7 decreases, and the magnetic repelling force of the second magnetic component 8 acting on the two first magnetic components 7 increases. The direction of the resultant magnetic force of the second magnetic component 8 acting on the two first magnetic components 7 is changed when the second magnetic component 8 or the switch 5 is rotated over 45 degrees, i.e., the second magnetic component 8 is rotated over a position as shown in FIG. 24.

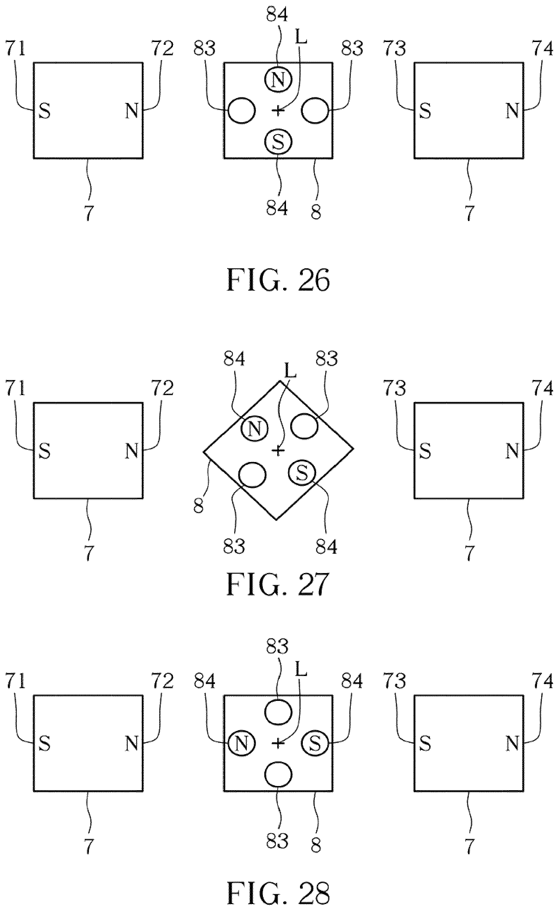

Please further refer to FIG. 26 to FIG. 28. FIG. 26 to FIG. 28 are diagrams of the two first magnetic components 7 and the second magnetic component in different states according to another embodiment of the present disclosure. As shown in FIG. 26 to FIG. 28, in some embodiments, the first end 71 and the second end 72 of the left first magnetic component 7 can be respectively a south pole (S) and a north pole (N), and the first end 73 and the second end 74 of the right first magnetic component 7 can be respectively a south pole (S) and a north pole (N). The second magnetic component 8 can be arranged with two attracting portions 83 opposite to each other and two repelling portions 84 opposite to each other. A line between the two attracting portions 83 can be perpendicular to a line between the two repelling portions 84. The two attracting portions 83 can be made of magnetic conductive material, and the two repelling portions 84 can be a north pole (N) and a south pole (S). When the operating component 4 is released, the two first magnetic components 7 and the second magnetic component 8 are located at positions as shown in FIG. 26, so that the attracting portions 83 of the second magnetic component 8 located at 3 and 9 o'clock directions can respectively magnetically attract the second end 72 of the left first magnetic component 7 and the first end 73 of the right first magnetic component 7. When the operating component is operated to slide, the second magnetic component 8 can be driven to rotated by 90 degrees to be located at a position as shown in FIG. 28 around the rotating axis L, so that the direction of the magnetic force of the second magnetic component 8 acting on the two first magnetic components 7 is changed. At this moment, the repelling portions 84 of the second magnetic component 8 can respectively magnetically repel the first end 73 of the right first magnetic component 7 and the second end 72 of the left first magnetic component 7. In detailed, during the rotation of the second magnetic component 8 around the rotating axis L from the position as shown in FIG. 26 to the position as shown in FIG. 28, the magnetic attracting force of the second magnetic component 8 acting on the two first magnetic components 7 decreases, and the magnetic repelling force of the second magnetic component 8 acting on the two first magnetic components 7 increases. The direction of the resultant magnetic force of the second magnetic component 8 acting on the two first magnetic components 7 is changed when the second magnetic component 8 or the switch 5 is rotated over 45 degrees, i.e., the second magnetic component 8 is rotated over a position as shown in FIG. 27.

Secondly, as shown in FIG. 9 to FIG. 11 and FIG. 15, in some embodiments, the operating component 4 is rotatably disposed on a front wall of the second buckle component 3 and can be a rotary knob. On the other hand, in the magnetic buckle assembly 100a of the aforementioned embodiments, the operating component 4 is slidably disposed on the lateral wall of the second buckle component 3 and can be a push button.

Thirdly, as shown in FIG. 9 to FIG. 11 and FIG. 21, in some embodiments, the operating component 4 and the switch 5 are fixedly connected to each other, so that the operating component 4 can drive the switch 5 to rotate around the rotating axis L when the operating component 4 is operated to rotate. Specifically, in some embodiments, a connecting chamber 41 is formed on the operating component 4 and includes a connecting opening facing toward the switch 5, and the second magnetic component 8 is partially located inside the connecting chamber 41. An end portion of the switch 5 covers the connecting opening. Furthermore, the magnetic buckle assembly 100b further includes a connecting component 12 connected to the operating component 4 and the switch 5 along the rotating axis L. In some embodiments, the connecting component 12 can be a screw member. However, the present disclosure is not limited to thereto. For example, the connecting component can be a rivet or a pin. An accommodating chamber 52 is formed on the end portion of the switch 5. The accommodating chamber 52 includes an accommodating opening facing toward the connecting chamber 41 and communicated with the connecting chamber 41, and the connecting chamber 41 and the accommodating chamber 52 cooperatively accommodate the second magnetic component 8. On the other hand, in the magnetic buckle assembly 100a of the aforementioned embodiments, the operating component 4 is operated to slide to drive the switch 5 to rotate, and the second magnetic component 8 is embedded into the hollow structure 53 formed on the switch 5.

Fourthly, as shown in FIG. 10, FIG. 11, FIG. 20 and FIG. 22, in some embodiments, a first resilient component 13b is disposed between the switch 5 and the second buckle component 3 to bias the switch 5 to drive the operating component 4 to recover. The first resilient component 13b can be a torsional spring sheathed on the switch 5 and located between the switch 5 and the latch 6. On the other hand, in the magnetic buckle assembly 100a of the aforementioned embodiments, the first resilient component 13a can be the elastic spring disposed between the operating component 4 and the second buckle component 3.

Fifthly, as shown in FIG. 10, FIG. 11 and FIG. 16 to FIG. 19, in some embodiments, each locked structure 103 is formed on the corresponding shoulder strap buckle 1. On the other hand, in the magnetic buckle assembly 100a of the aforementioned embodiments, each locked structure 103 is formed on the corresponding waist strap buckle 2.

Sixthly, as shown in FIG. 10, FIG. 11, FIG. 21 and FIG.22,in some embodiments, the latch 6 is linked to the switch 5, so that the operating component 4 can drive the latch 6 to allow the separation of each first buckle component 10 and the second buckle component 3 by the switch 5 indirectly when the operating component 4 is operated to drive the switch 5 to rotate to reverse the orientation of the second magnetic component 8, so as to reverse the direction of the magnetic field of the second magnetic component 8. Specifically, a driven cooperating structure 152 is formed on the latch 6, and a driving cooperating structure 142 is formed on the switch 5. More specifically, the driving cooperating structure 142 is located at the end portion of the switch 5 facing toward the latch 6. The latch 6 is slidably disposed on the second buckle component 3. The switch 5 rotates to drive the latch 6 to slide by cooperation of the driving cooperating structure 142 and the driven cooperating structure 152 to disengage the locking structures 61 formed on the latch 6 from the locked structures 103 formed on the shoulder strap buckles 2. The driving cooperating structure 142 can be a first helical surface structure, and a central axis of the first helical surface structure can coincide with the rotating axis L. The driven cooperating structure 152 can be a second helical surface structure. When the switch 5 rotates, the switch 5 drives the latch to slide by cooperation of the first helical surface structure and the second helical surface structure to disengage the locking structures 61 formed on the latch 6 from the locked structures 103 formed on the shoulder strap buckles 2. However, the present disclosure is not limited to the aforementioned embodiments. For example, in another embodiment, the driven cooperating structure can be a first helical surface structure, and the driving cooperating structure can be a protrusion slidable along the first helical surface structure. Alternatively, in another embodiment, the driving cooperating structure can be a first helical surface structure, and the driven cooperating structure can be a protrusion slidable along the first helical surface structure, so that the switch can drive the latch to slide by cooperation of the first helical surface structure and the protrusion when the switch is rotated. On the other hand, in the magnetic buckle assembly 100a of the aforementioned embodiments, the latch 6 is linked to the operating component 4. The operating component drives the latch by the cooperation of the driving cooperating structure 141, i.e., the first inclined surface structure, formed on the operating component 4 and the driven cooperating structure 151, i.e., the second inclined surface, formed on the latch 6 to drive the locking structure 61 to disengage from the locked structure 103.

Seventhly, as shown in FIG. 10 and FIG. 11, in some embodiments, the first magnetic component 7 is aligned with the third magnetic component 9 along the front-rear direction of the magnetic buckle assembly 100b. On the other hand, in the magnetic buckle assembly 100a of the aforementioned embodiments, the first magnetic component is aligned with the third magnetic component 9 along the lateral direction of the magnetic buckle assembly 100a.

Other structures of the magnetic buckle assembly 100b are similar to the ones of the magnetic buckle assembly 100a. Detailed description thereof is omitted herein for simplicity.

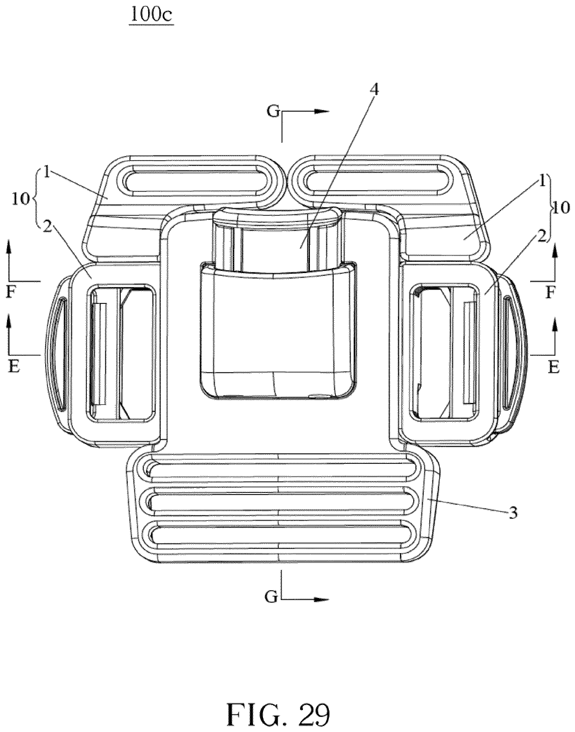

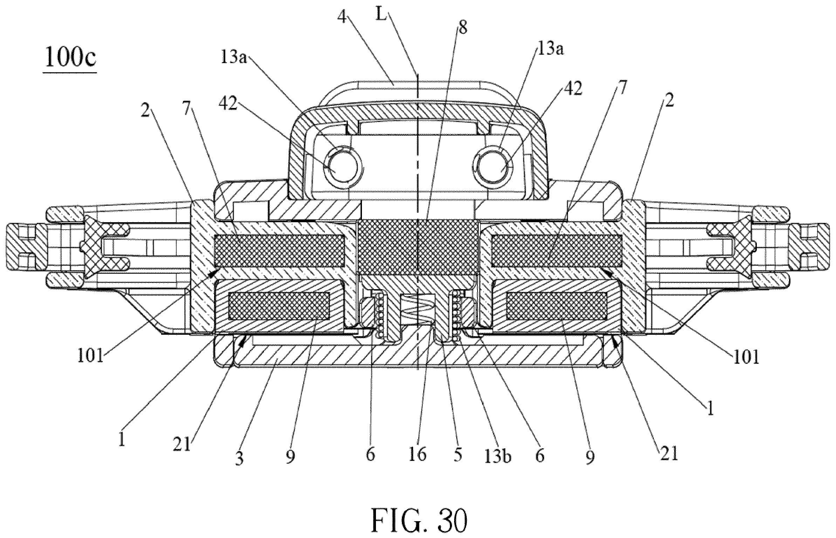

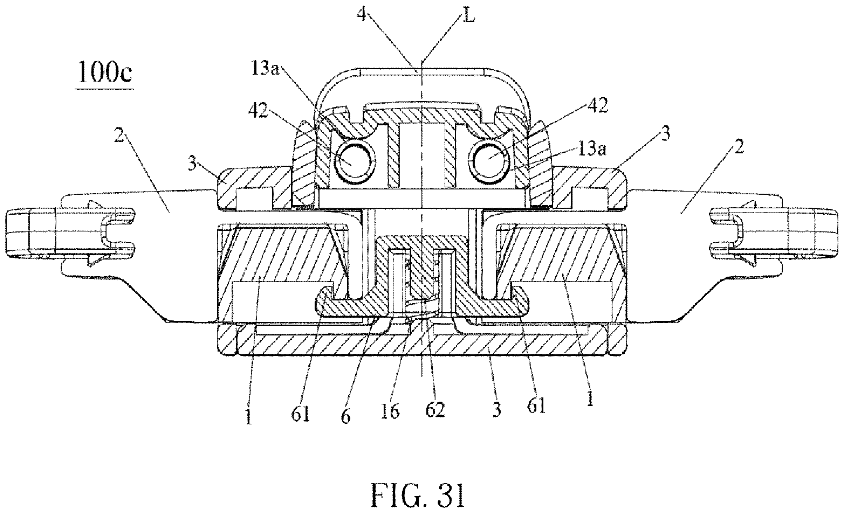

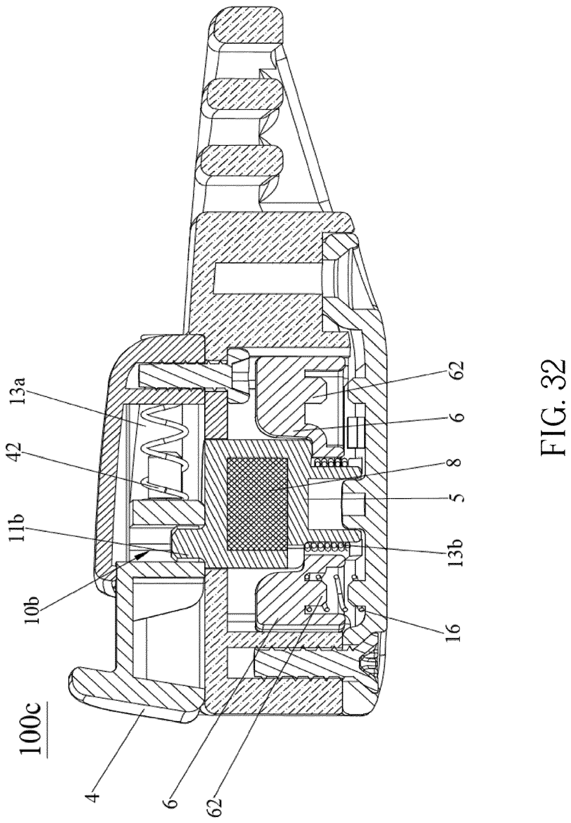

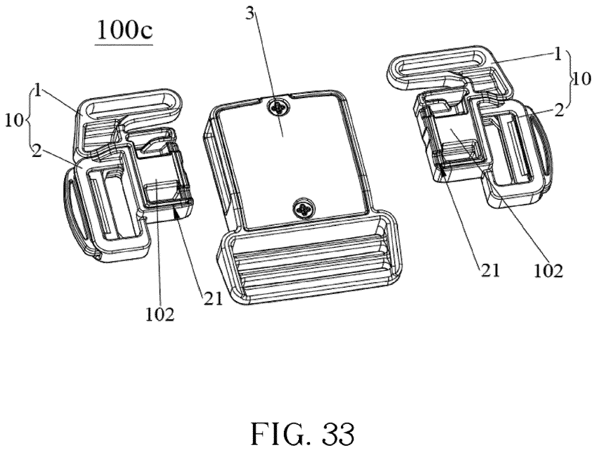

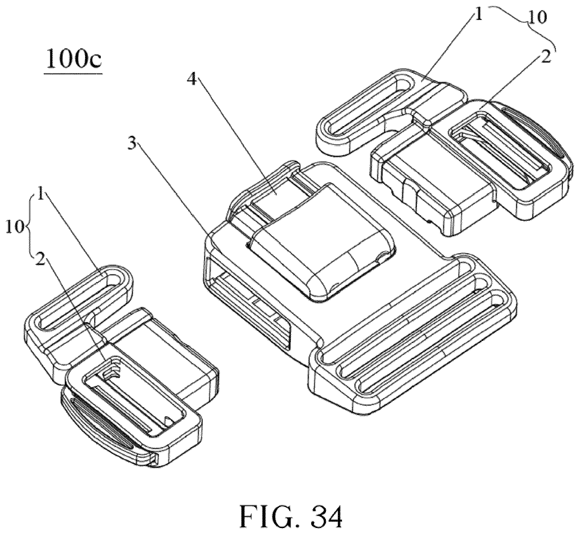

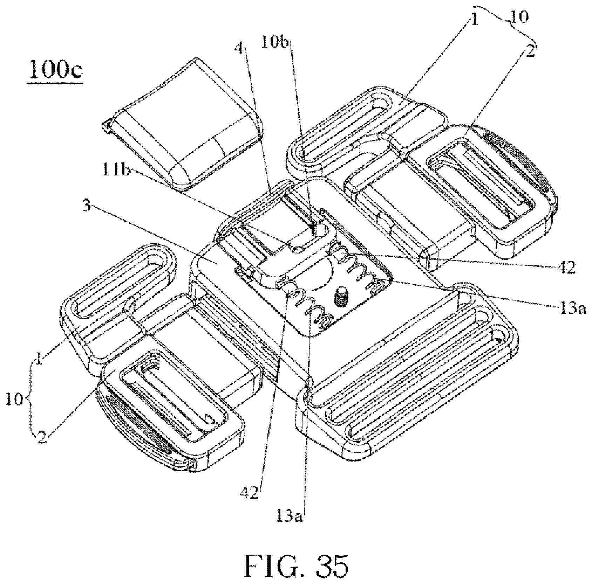

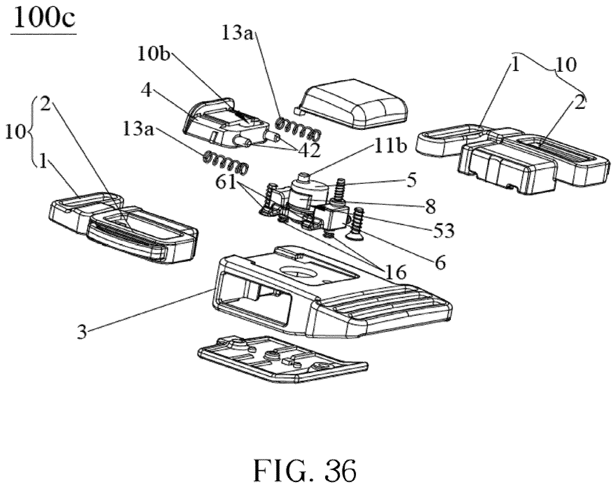

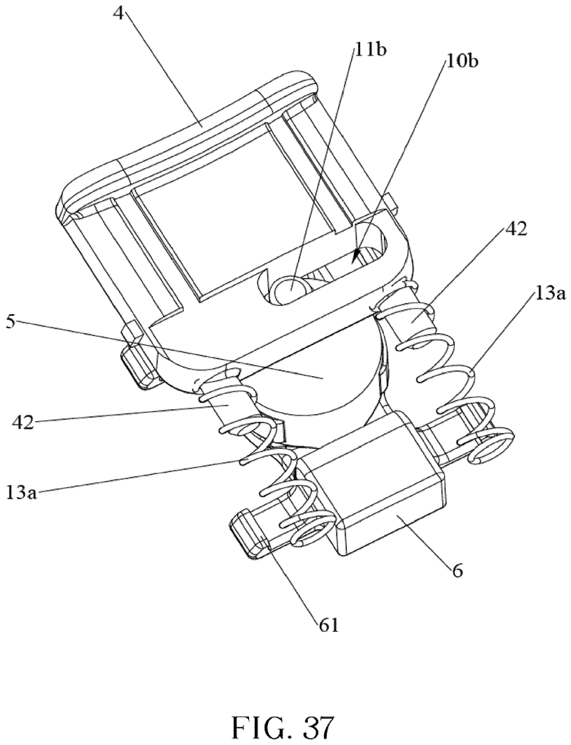

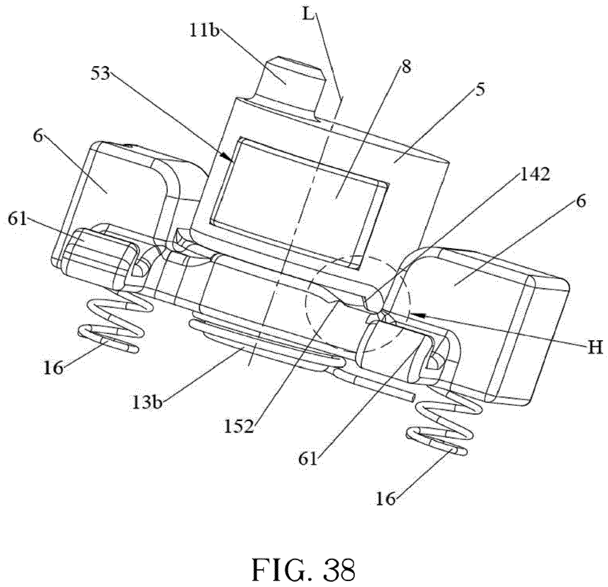

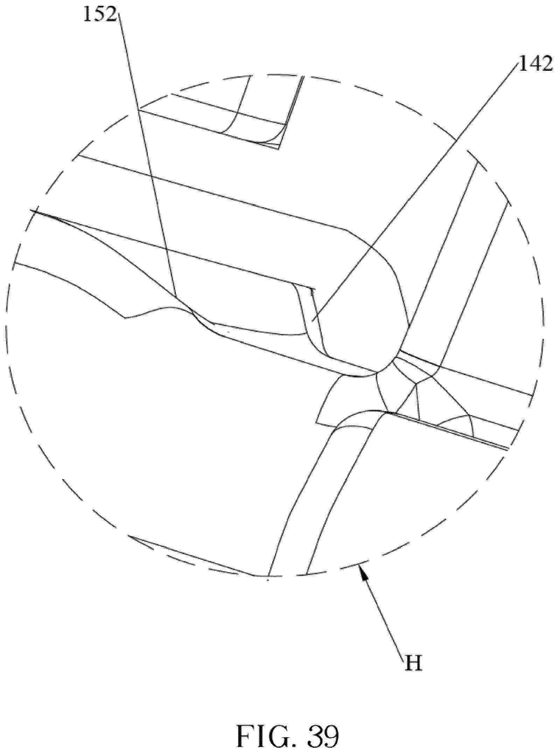

Please refer to FIG. 29 to FIG. 39. FIG. 29 is a front view diagram of a magnetic buckle assembly 100c according to some embodiments of the present disclosure. FIG. 30 is a sectional diagram of the magnetic buckle assembly 100c along an E-E line shown in FIG. 29 according to some embodiments of the present disclosure. FIG. 31 is a sectional diagram of the magnetic buckle assembly 100c along an F-F line shown in FIG. 29 according to some embodiments of the present disclosure. FIG. 32 is a sectional diagram of the magnetic buckle assembly 100c along a G-G line shown in FIG. 29 according to some embodiments of the present disclosure. FIG. 33 and FIG. 34 are diagrams of the magnetic buckle assembly 100c at different views as the two first buckle components 10 are detached according to some embodiments of the present disclosure. FIG. 35 is a diagram of the magnetic buckle assembly 100c as the two first buckle components 10 and a cover of a second buckle component 3 are detached according to some embodiments of the present disclosure. FIG. 36 is an exploded diagram of the magnetic buckle assembly 100c according to some embodiments of the present disclosure. FIG. 37 is a partial diagram of the magnetic buckle assembly 100c according to some embodiments of the present disclosure. FIG. 38 is another partial diagram of the magnetic buckle assembly 100c according to some embodiments of the present disclosure. FIG. 39 is an enlarged diagram of an H portion of the magnetic buckle assembly 100c shown in FIG. 38 according to some embodiments of the present disclosure. The difference between the magnetic buckle assembly 100b and the magnetic buckle assembly 100c is provided as follows.

Firstly, as shown in FIG. 29 to FIG. 39, in some embodiments, the operating component 4 is movably connected to the switch 5. Specifically, the operating component 4 is slidably disposed on the front wall of the second buckle component 3 and drives the switch 5 to rotate around the rotating axis L when the operating component 4 is operated to slide. The operating component 4 can be a push button. The sliding direction of the operating component 4 relative to the second buckle component 3 intersects with an arranging direction of the rotating axis L and perpendicular to the lateral direction and the front-rear direction of the magnetic buckle assembly 100c. A driving structure 10b is formed on the operating component 4, and a driven structure 11b is formed on the switch 5 for cooperating with the driving structure 10b. The operating component 4 drives the switch 5 to rotate around the rotating axis L by cooperation of the driving structure 10b and the driven structure 11b. The driving structure 10b can be a slot structure, and the driven structure 11b can be a column structure slidably disposed inside the slot structure and offset from the rotating axis L. When the operating component 4 is operated to slide, the operating component 4 drives the switch 5 to rotate by cooperation of the slot structure and the column structure. More specifically, the column structure is located at an end surface of the switch 5 facing toward the operating component 4, and a longitudinal direction of the slot structure intersects with the sliding direction of the operating component 4. The longitudinal direction of the slot structure can be perpendicular to the sliding direction of the operating component 4, so that a resultant force acting on the switch 5 can drive the switch 5 to rotate around the rotating axis L. Furthermore, the hollow structure 53 is formed on a middle portion of the switch 5, and the second magnetic component 8 is embedded into the hollow structure 53. On the other hand, in the magnetic buckle assembly 100B of the aforementioned embodiments, the operating component 4 is fixed onto the switch 5, and the operating component 4 rotates to drive the switch 5 to rotate. Furthermore, in the magnetic buckle assembly 100a of the aforementioned embodiments, the second magnetic component 8 is accommodated inside the connecting chamber 41 and the accommodating chamber 52.

Secondly, as shown in FIG. 32 and FIG. 35 to FIG. 37, in some embodiments, the first resilient component 13a can be the elastic spring disposed between the operating component 4 and the second buckle component 3. The guiding portion 42 is formed on the operating component 4 for resiliently deforming the first resilient component 13a, and the first resilient component 13a is sheathed on the guiding portion 42. On the other hand, the first resilient component 13b is a torsional spring sheathed on the switch 5 and located between the switch 5 and the second buckle component 3, i.e., a lateral surface of the switch 5 guides the deformation of the torsional spring.

Other structures of the magnetic buckle assembly 100c are similar to the ones of the magnetic buckle assembly 100b. Detailed description thereof is omitted herein for simplicity.

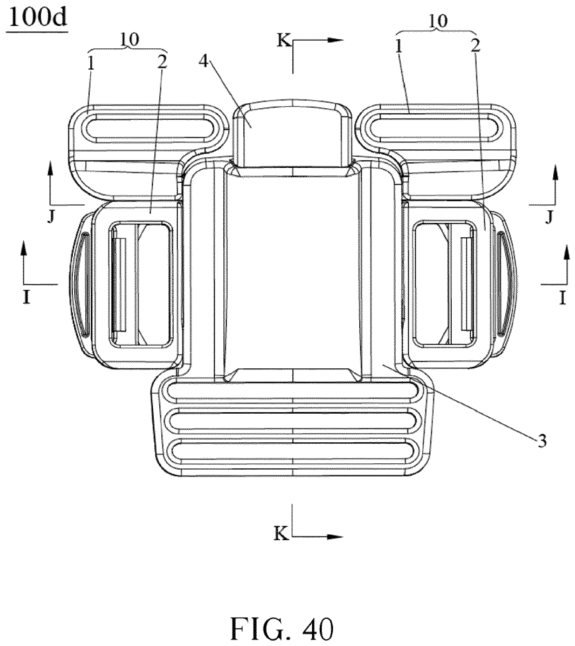

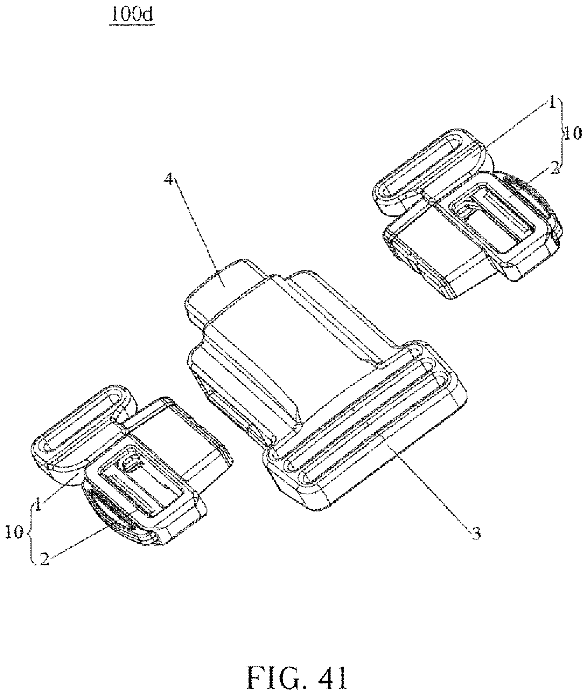

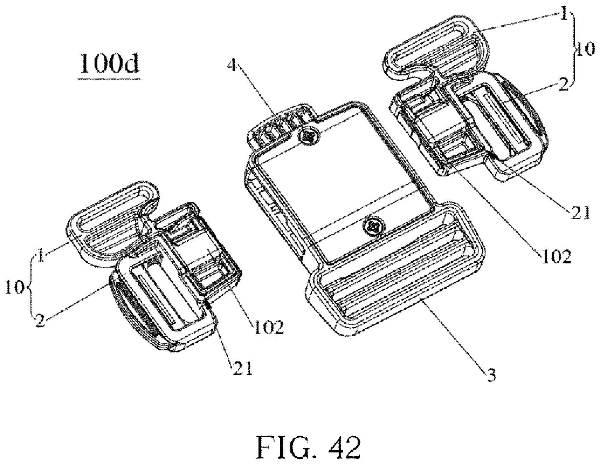

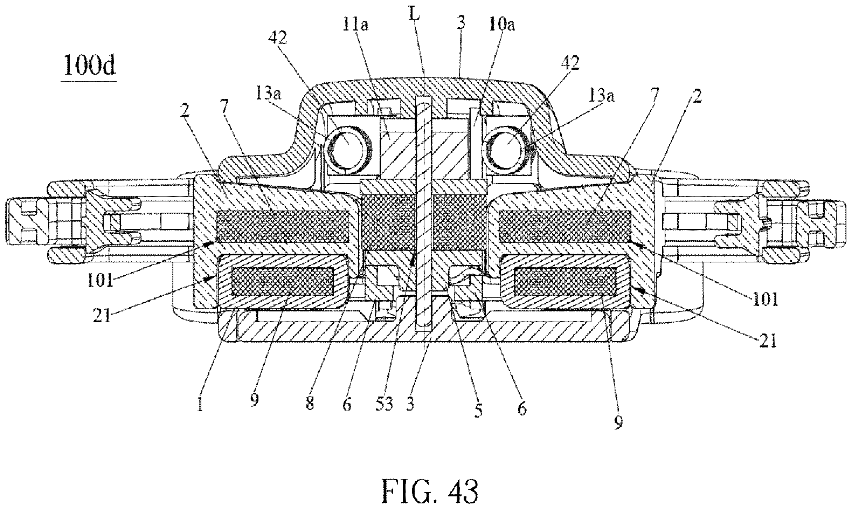

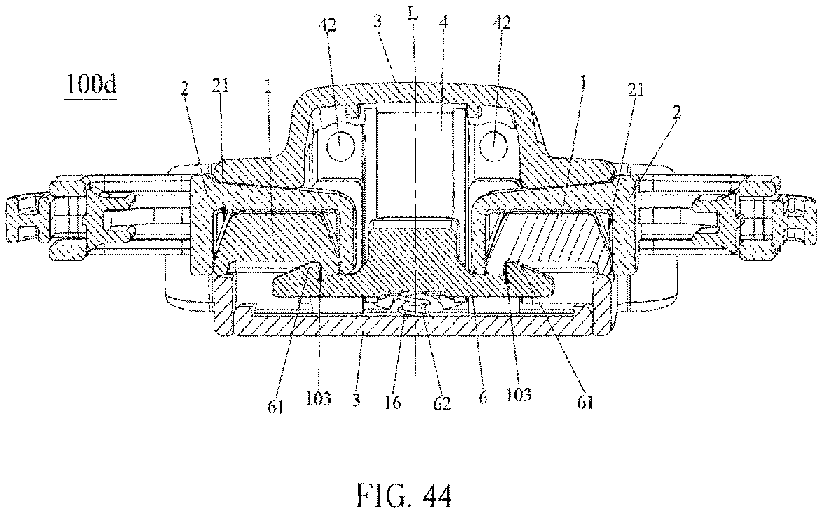

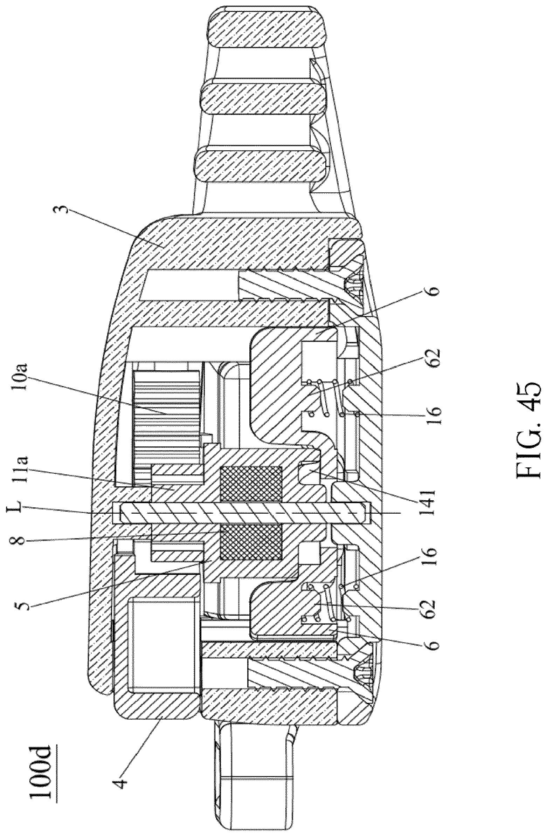

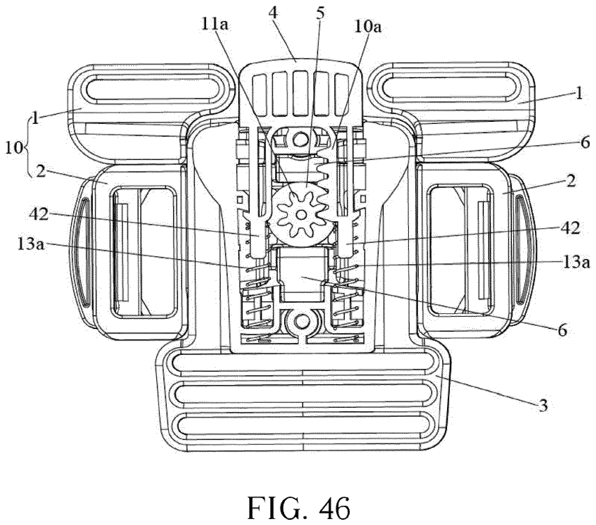

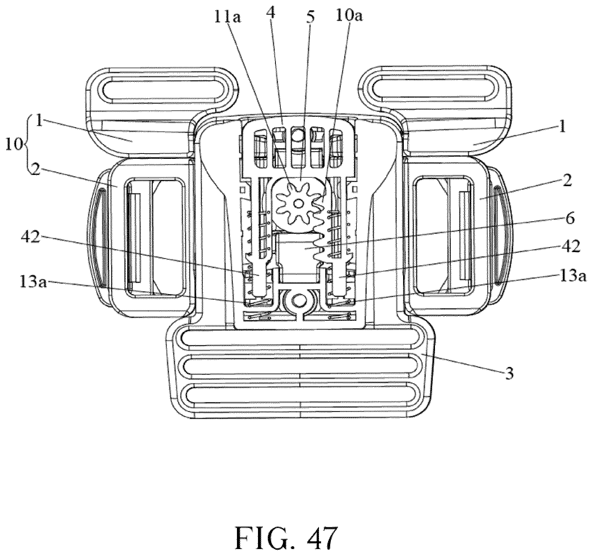

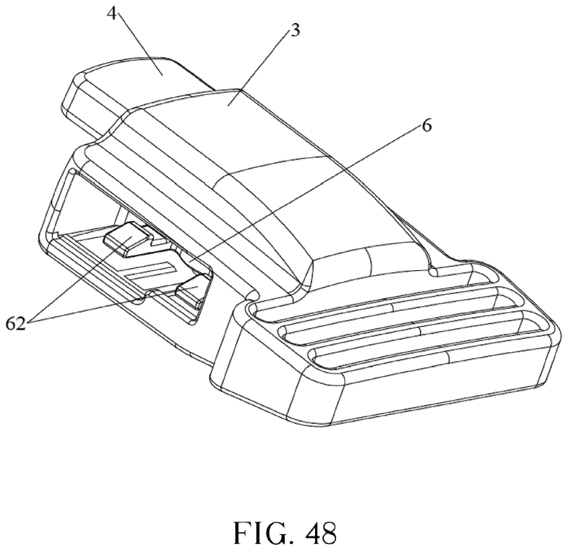

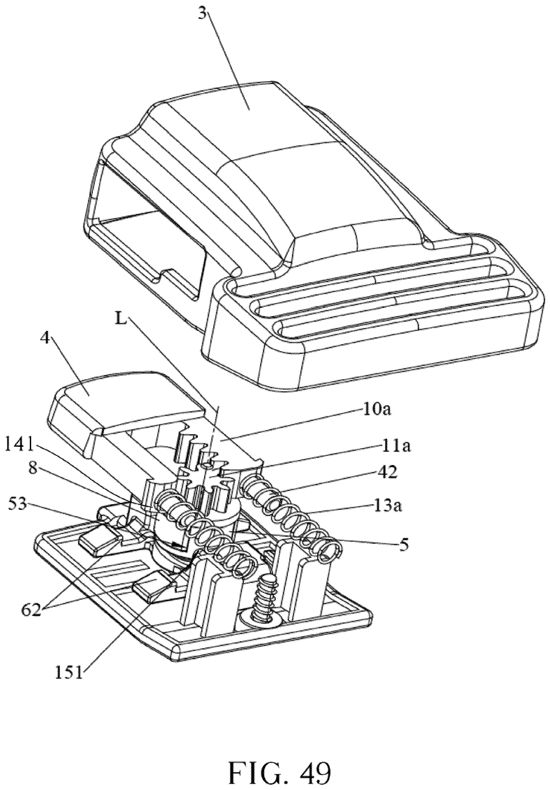

Please refer to FIG. 40 to FIG. 49. FIG. 40 is a front view diagram of the magnetic buckle assembly 100d according to some embodiments of the present disclosure. FIG. 41 and FIG. 42 are diagrams of the magnetic buckle assembly 100d at different views as the two first buckle components 10 are detached according to some embodiments of the present disclosure. FIG. 43 is a sectional diagram of the magnetic buckle assembly 100d along an I-I line shown in FIG. 40 according to some embodiments of the present disclosure. FIG. 44 is a sectional diagram of the magnetic buckle assembly 100d along a J-J line shown in FIG. 40 according to some embodiments of the present disclosure. FIG. 45 is a sectional diagram of the magnetic buckle assembly 100d along a K-K line shown in FIG. 40 according to some embodiments of the present disclosure. FIG. 46 and FIG. 47 are internal structural diagrams of the magnetic buckle assembly 100d in different states according to some embodiments of the present disclosure. FIG. 48 is a diagram of the second buckle component 3 according to some embodiments of the present disclosure. FIG. 49 is an exploded diagram of the second buckle component 3 according to some embodiments of the present disclosure. The difference between the magnetic buckle assembly 100c and the magnetic buckle assembly 100d is provided as follows. As shown in FIG. 40 to FIG. 49, in some embodiments, the driving structure 10a can be a gear rack structure, and the driven structure 11a can be a gear wheel structure for rotatably engaging with the gear rack structure. When the operating component 4 is operated to slide, the operating component 4 drives the switch 5 to rotate by cooperation of the gear rack structure and the gear wheel structure. Specifically, the gear wheel structure is located at an end portion of the switch 5 adjacent to the operating component 4. Furthermore, in some embodiments, the driving cooperating structure 141, i.e., the first inclined surface structure, is formed on the operating component 4. The driven cooperating structure 151, i.e., the second inclined surface, is formed on the latch 6, so that the operating component 4 can drive the latch 6 by cooperation of the driving cooperating structure 141 and the driven cooperating structure 151 when the operating component 4 is operated to slide.

Other structures of the magnetic buckle assembly 100d are similar to the ones of the magnetic buckle assembly 100c. Detailed description thereof is omitted herein for simplicity.

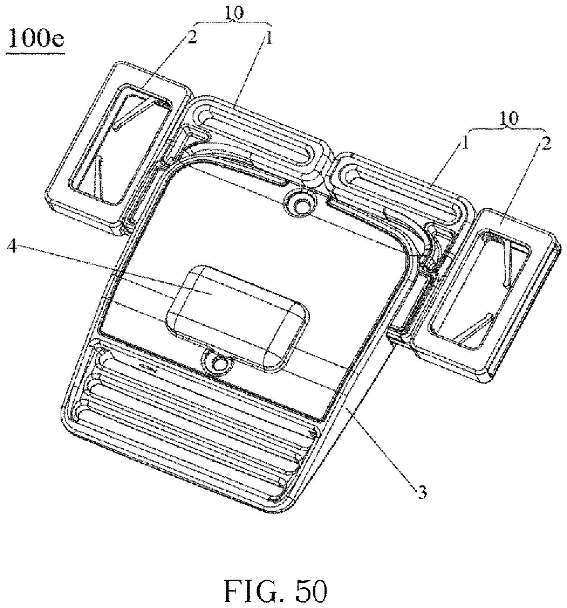

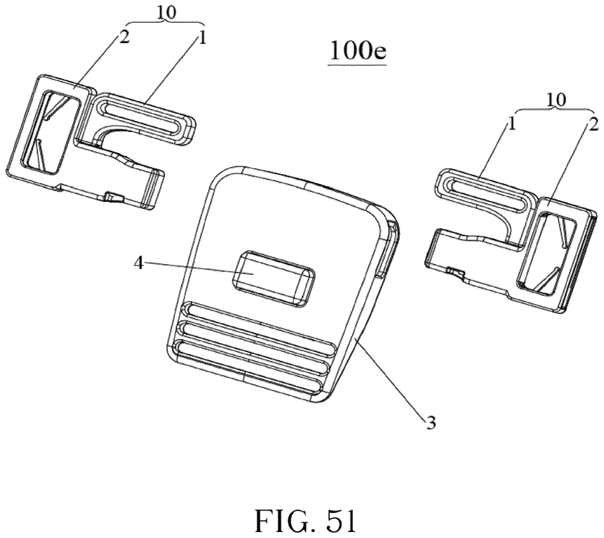

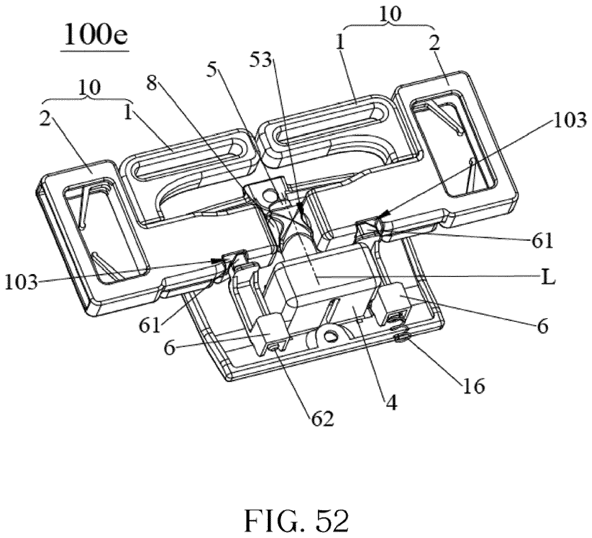

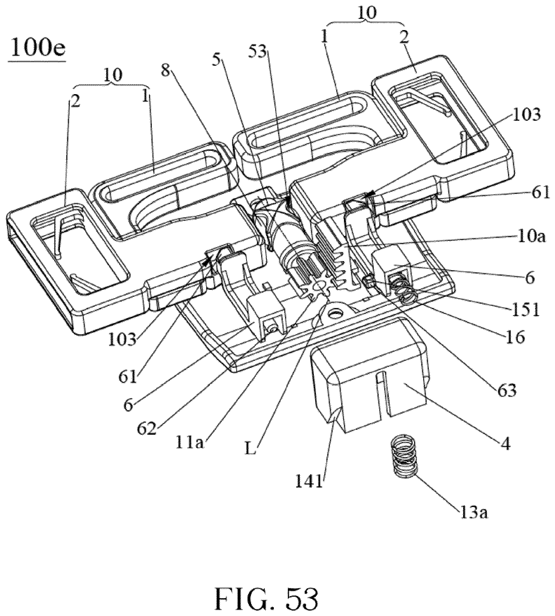

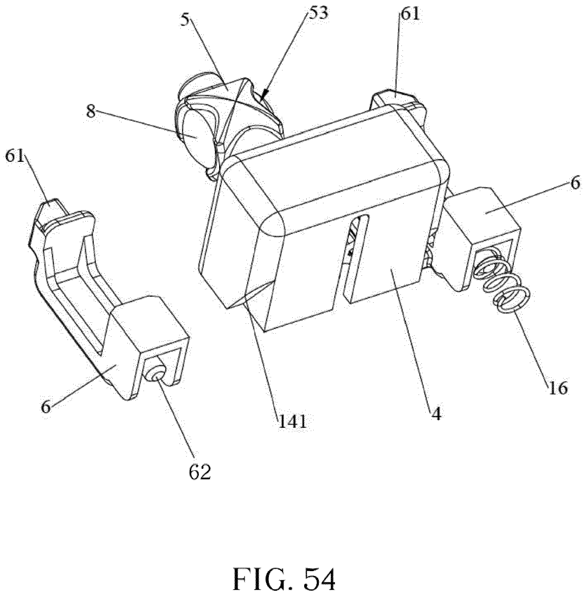

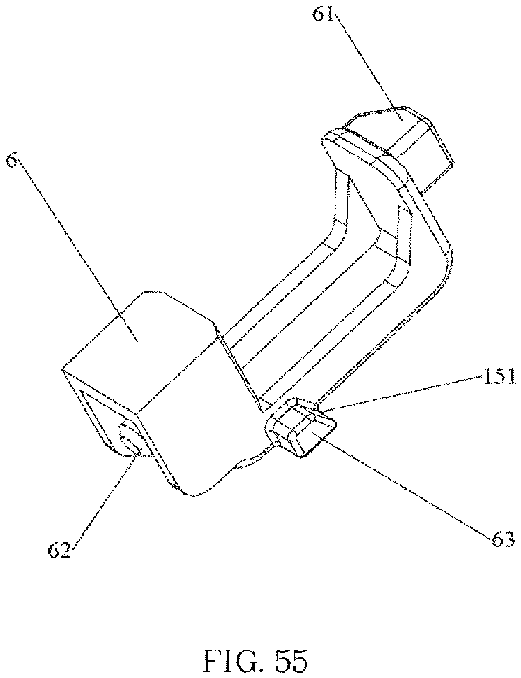

Please refer to FIG. 50 to FIG. 55. FIG. 50 is a diagram of a magnetic buckle assembly 100e according to some embodiments of the present disclosure. FIG. 51 is a diagram of the magnetic buckle assembly 100e as the two first buckle components 10 are detached according to some embodiments of the present disclosure. FIG. 52 is a partial diagram of the magnetic buckle assembly 100e according to some embodiments of the present disclosure. FIG. 53 is a partial exploded diagram of the magnetic buckle assembly 100e according to some embodiments of the present disclosure. FIG. 54 is another partial diagram of the magnetic buckle assembly 100e according to some embodiments of the present disclosure. FIG. 55 is a diagram of the latch 6 according to some embodiments of the present disclosure. The difference between the magnetic buckle assembly 100a and the magnetic buckle assembly 100e is provided as follows.

Firstly, as shown in FIG. 50 to FIG. 55, in some embodiments, the operating component 4 is disposed on the front wall of the second buckle component 3 and slidable along the front-rear direction of the magnetic buckle assembly 100d. On the other hand, in the magnetic buckle assembly 100a of the aforementioned embodiments, the operating component 4 is disposed on the lateral wall of the second buckle component 3 and slidable along the lateral direction of the magnetic buckle assembly 100a.

Secondly, as shown in FIG. 53 to FIG. 55, in some embodiments, the driving cooperating structure 141, i.e., the first inclined surface structure, is formed on a lateral wall of the operating component 4. The driven cooperating structure 151, i.e., the second inclined surface, is formed on a protrusion of a lateral wall of the latch 6. On the other hand, in the magnetic buckle assembly 100a of the aforementioned embodiments, the driving cooperating structure 141, i.e., the first inclined surface structure, is formed on a bottom wall of the operating component 4, and the driven cooperating structure 151, i.e., the second inclined surface, is formed on a top wall of the latch 6.

Other structures of the magnetic buckle assembly 100e are similar to the ones of the magnetic buckle assembly 100a. Detailed description thereof is omitted herein for simplicity.

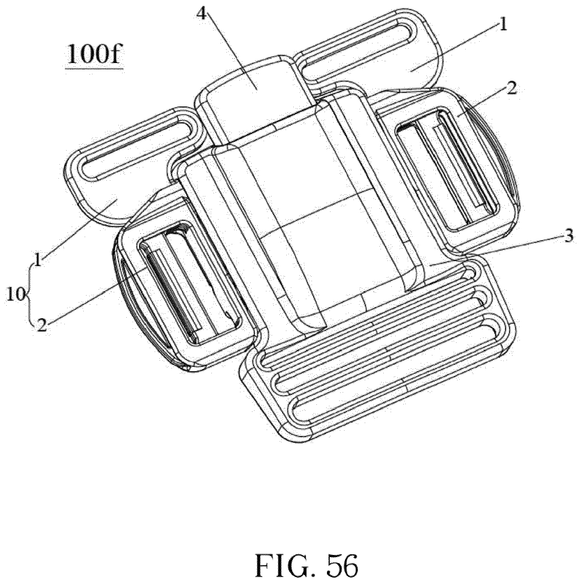

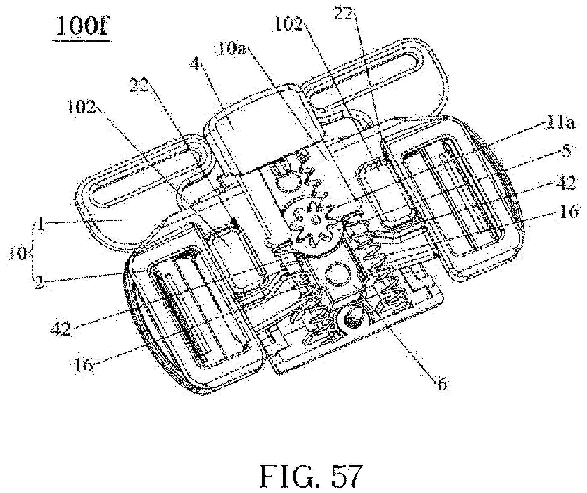

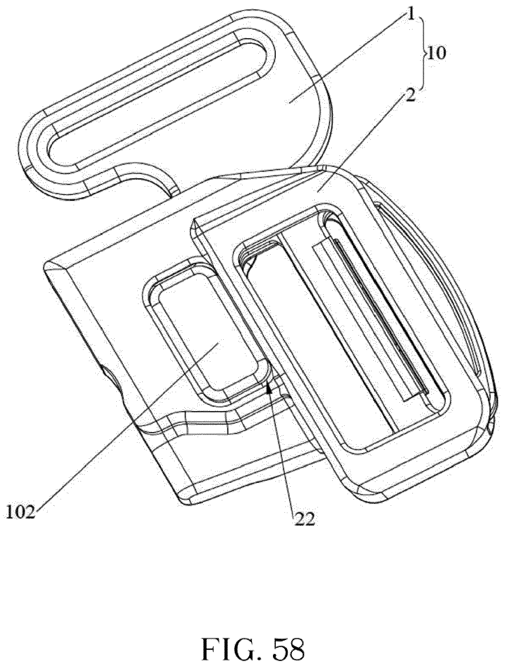

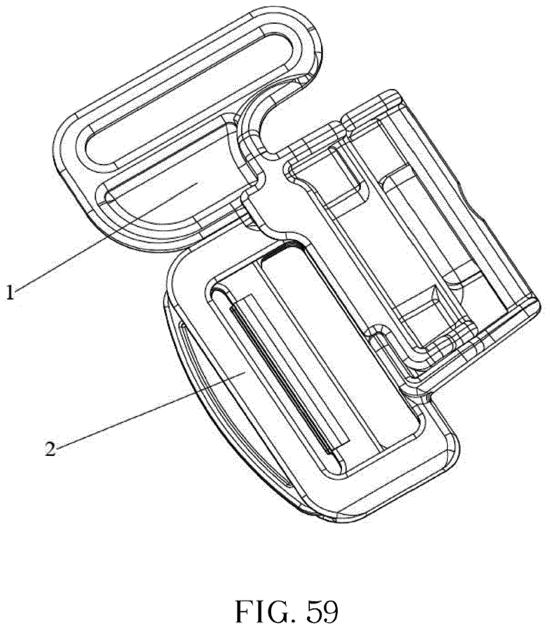

Please refer to FIG. 56 to FIG. 59. FIG. 56 is a schematic diagram of a magnetic buckle assembly 100f according to some embodiments of the present disclosure. FIG. 57 is a partial diagram of the magnetic buckle assembly 100f according to some embodiments of the present disclosure. FIG. 58 and FIG. 59 are diagrams of the second buckle component 3 at different views according to some embodiments of the present disclosure. The difference between the magnetic buckle assembly 100d and the magnetic buckle assembly 100f is provided as follows.

Firstly, as shown in FIG. 56 to FIG. 59, in some embodiments, the shoulder strap buckle 1 is stacked above the waist strap buckle 2 along a front-rear direction of the magnetic buckle assembly 100f. An engaging portion 22 is formed on the waist strap buckle 2. The engaging portion 22 can be an engaging hole. The engaging arm 102 protrudes from the shoulder strap buckle 1 for engaging with the engaging portion 22, and an outline of the engaging arm 102 matches with an outline of the engaging hole. The engaging arm 102 is embedded into the engaging hole, so that the engaging arm 102 is visible from the front, which makes the connection of the shoulder strap buckle 1 and the waist strap buckle 2 more easily. On the other hand, in the magnetic buckle assembly 100d of the aforementioned embodiments, the engaging arm 102 engages with the recess structure formed on the rear surface of the waist strap buckle 3, so that the engaging arm 102 is invisible from the front. The configuration of the connection of the shoulder strap buckle 1 and the waist strap buckle 2 depends on practical demands.

Secondly, as shown in FIG. 56 to FIG. 59, in some embodiments, the magnetic buckle assembly 100f includes the two first magnetic components 7 disposed on the two first buckle components 10 and the second magnetic component 8 disposed on the switch 5 inside the second buckle component 3, and the third magnetic component is omitted herein for reducing occupied space of the first buckle component 10 and lowering the manufacturing cost. On the other hands, in the magnetic buckle assembly 100d of the aforementioned embodiments, the magnetic buckle assembly 100d includes the two first magnetic components 7 disposed on the two first buckle components 10, the two third magnetic components 9 disposed on the two first buckle components 10 and the second magnetic component 8 disposed on the switch 5 inside the second buckle component 3.

Other structures of the magnetic buckle assembly 100f are similar to the ones of the magnetic buckle assembly 100d. Detailed description thereof is omitted herein for simplicity.

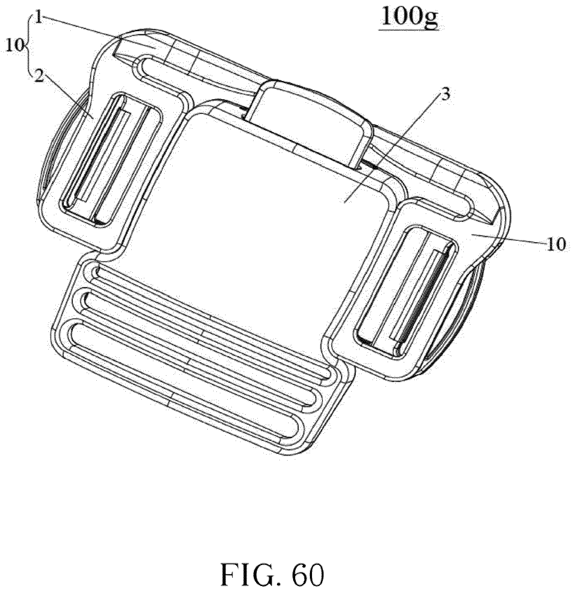

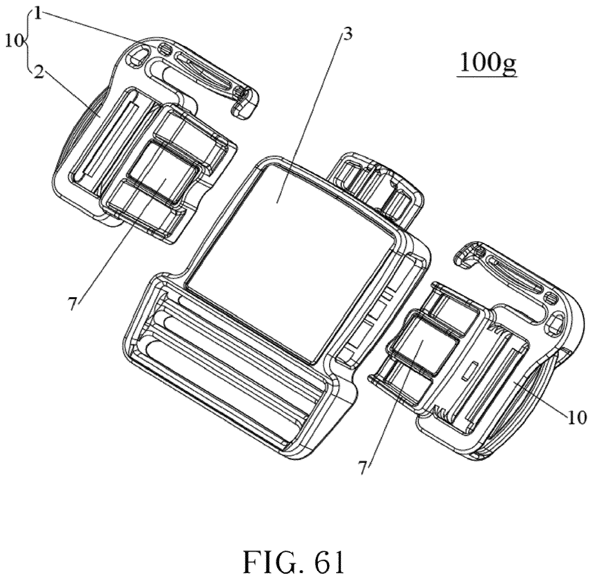

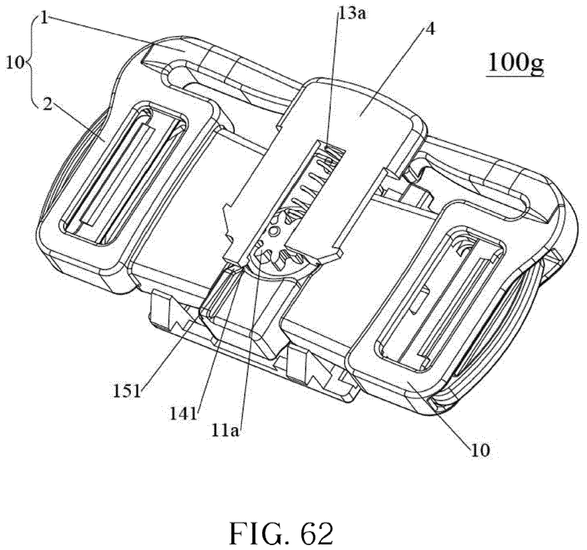

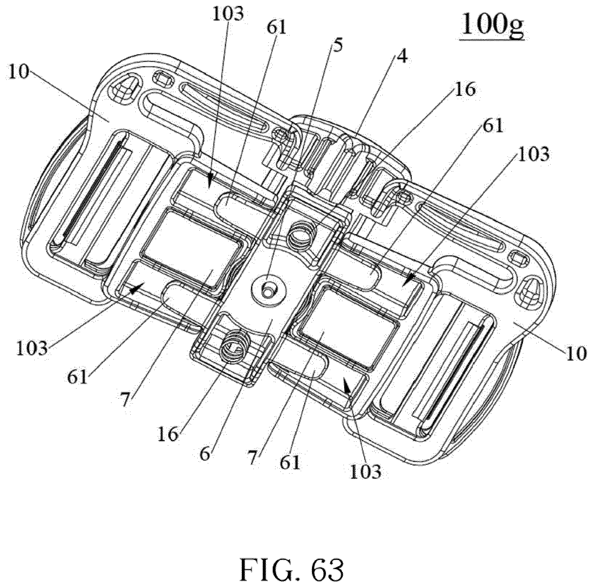

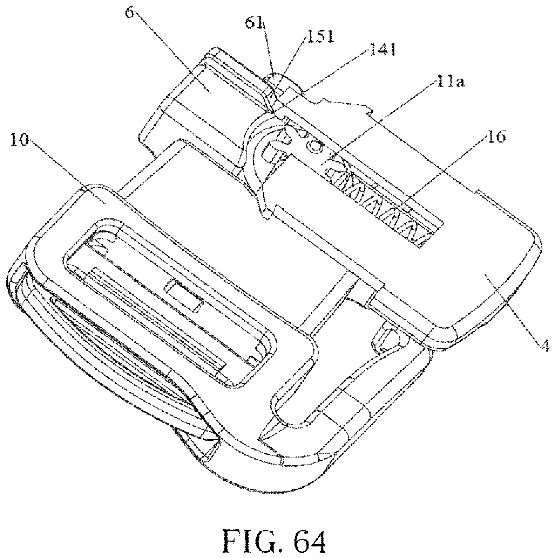

Please refer to FIG. 60 to FIG. 64. FIG. 60 is a schematic diagram of a magnetic buckle assembly 100g according to some embodiments of the present disclosure. FIG. 61 is a diagram of the magnetic buckle assembly 100g as the two first buckle components 10 are detached according to some embodiments of the present disclosure. FIG. 62 and FIG. 63 are partial diagrams of the magnetic buckle assembly 100g at different views according to some embodiments of the present disclosure. FIG. 64 is another partial diagram of the magnetic buckle assembly 100g according to some embodiments of the present disclosure. The difference between the magnetic buckle assembly 100d and the magnetic buckle assembly 100g is provided as follows.

Firstly, as shown in FIG. 60 and FIG. 61, in some embodiments, each first buckle component 10 includes the shoulder strap buckle 1 and the waist strap buckle 2. The shoulder strap buckle 1 and the waist strap buckle 2 are combined with each other to form a one-piece male buckle. The second buckle component 3 is a crotch strap buckle. On the other hand, in the magnetic buckle assembly 100d of the aforementioned embodiments, the shoulder strap buckle 1 and the waist strap buckle 2 are two separated structures which can be assembled with each other.

Secondly, as shown in FIG. 60 to FIG. 64, in some embodiments, the magnetic buckle assembly 100g includes the first magnetic components 7 disposed on the two first buckle components 10 and the second magnetic component 8 disposed on the switch 5 inside the second buckle component 3, and the third magnetic component is omitted. On the other hand, in the magnetic buckle assembly 100d of the aforementioned embodiments, the magnetic buckle assembly 100d includes the two first magnetic components 7 disposed on the two first buckle components 10, the two third magnetic components 9 disposed on the two first buckle components 10 and the second magnetic component 8 disposed on the switch 5 inside the second buckle component 3.

Thirdly, as shown in FIG. 62 to FIG. 64, in some embodiments, the operating component 4 is linked to the latch 6 directly. Specifically, the driven cooperating structure 151 is formed on the latch 6, and the driving cooperating structure 141 is formed on the operating component 4. When the operating component 4 is operated to slide, the operating component 4 drives the latch 6 by cooperation of the driving cooperating component 141 and the driven cooperating component 151 to disengage the locking structure 61 from the locked structure 103. The driving cooperating structure 141 can be a first inclined surface structure inclined relative to the sliding direction of the latch 6, and the driven cooperating structure 151 can be a second inclined surface structure. The operating component 4 is operated to slide to drive the first inclined surface structure to push the second inclined surface structure to drive the latch 6 to slide to disengage the locking structure 61 from the locked structure 103. On the other hand, in the magnetic buckle assembly 100d of the aforementioned embodiments, the operating component 4 drives the switch 5 to rotate to drive the latch 6 to slide. Specifically, when the operating component 4 drives the switch 5 to rotate, the switch 5 drives the latch 6 to slide by cooperation of the driving cooperating structure 141, i.e., the first inclined surface structure, and the driven cooperating structure 151, i.e., the second inclined surface structure, so as to disengage the locking structure 61 from the locked structure 103. Furthermore, in the magnetic buckle assembly 100d of the aforementioned embodiments, the central axis of the first helical surface structure coincides with the rotating axis L.

Other structures of the magnetic buckle assembly 100g are similar to the ones of the magnetic buckle assembly 100d. Detailed description thereof is omitted herein for simplicity.

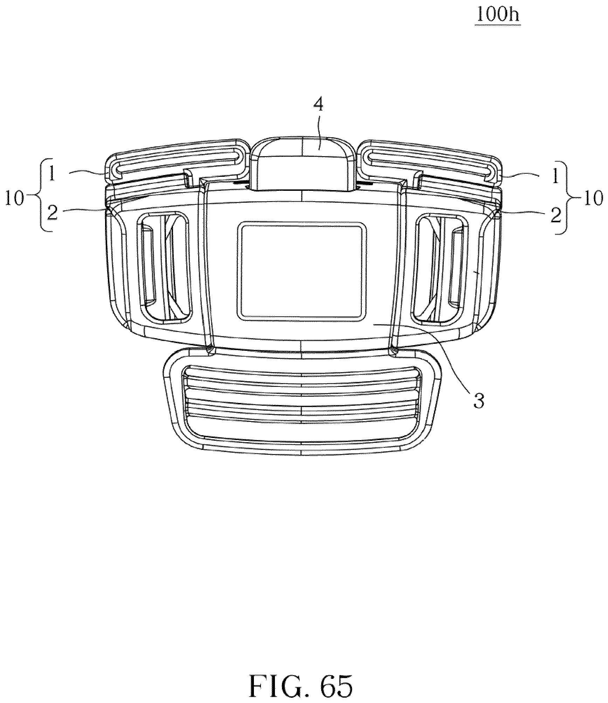

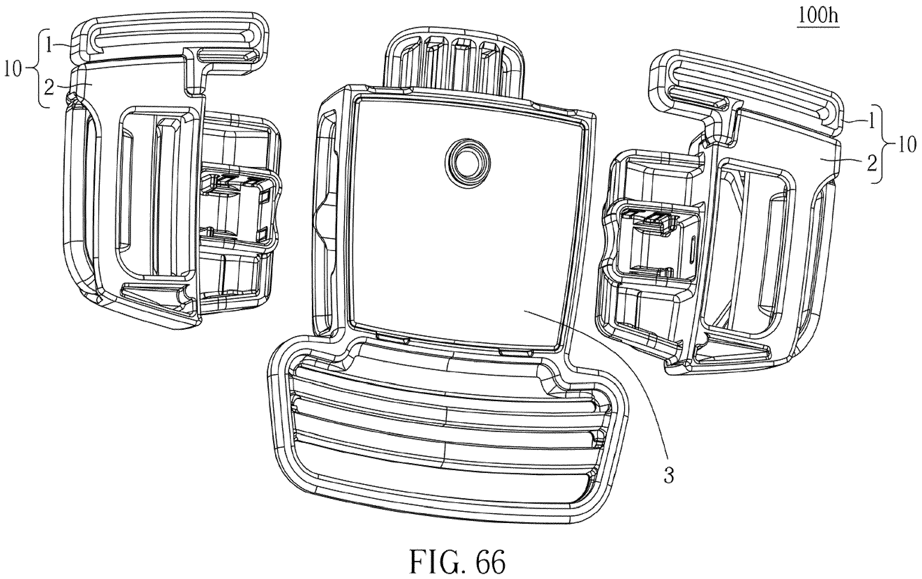

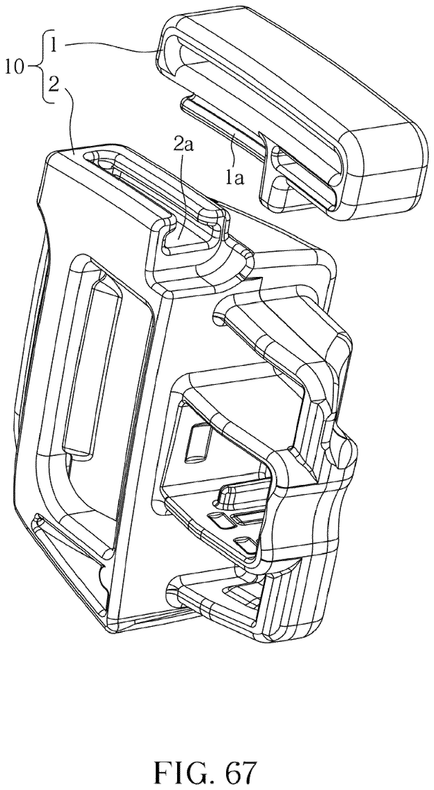

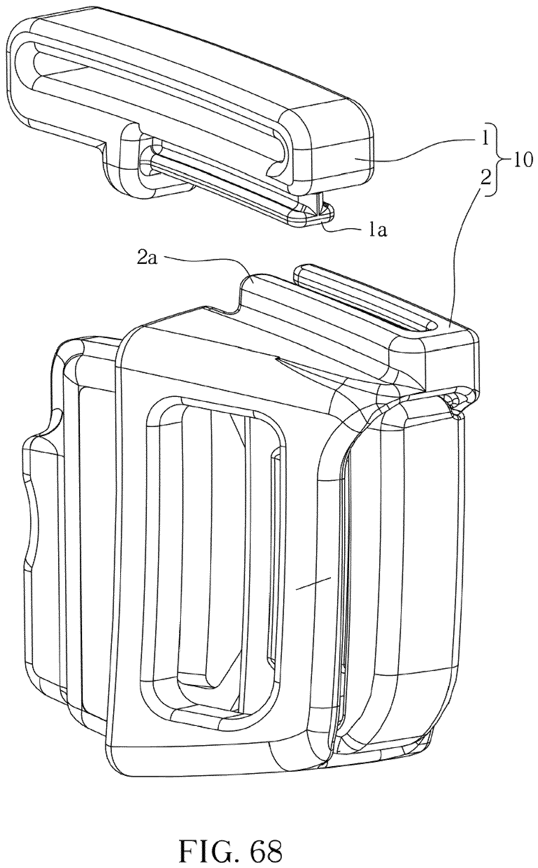

Please refer to FIG. 65 to FIG. 68. FIG. 65 is a front view diagram of a magnetic buckle assembly 100h according to some embodiments of the present disclosure. FIG. 66 is a partial diagram of the magnetic buckle assembly 100h as the two first buckle components 10 are detached according to some embodiments of the present disclosure. FIG. 67 and FIG. 68 are partial exploded diagrams of the first buckle component 10 at different views according to some embodiments of the present disclosure. The difference between the magnetic buckle assembly 100d and the magnetic buckle assembly 100g is provided as follows. As shown in FIG. 65 to FIG. 67, in some embodiments, each first buckle component 10 includes the shoulder strap buckle 1 and the waist strap buckle 2. The shoulder strap buckle 1 is slidably assembled with the waist strap buckle 2. Specifically, an inserting slot 2a is formed on the waist strap buckle 2. An inserting portion 1a is formed on the shoulder strap buckle 1. The shoulder strap buckle 1 is assembled with the waist strap buckle 2 by insertion of the inserting portion 1a into the inserting slot 2a. A cross section of the inserting portion 1a can be formed in a T shape, and a cross section of the inserting slot 2a matches with the cross section of the inserting portion 1a. Furthermore, there is no third magnetic component disposed on the shoulder strap buckle 1.

Other structures of the magnetic buckle assembly 100h are similar to the ones of the magnetic buckle assembly 100d. Detailed description thereof is omitted herein for simplicity.

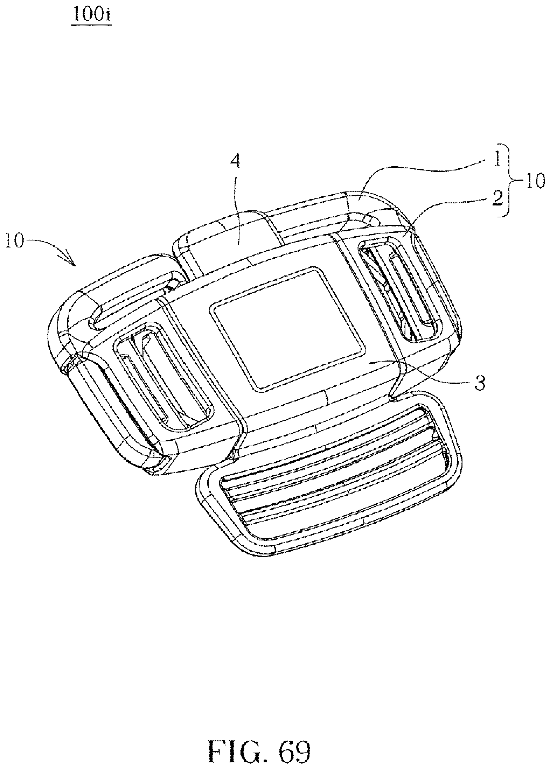

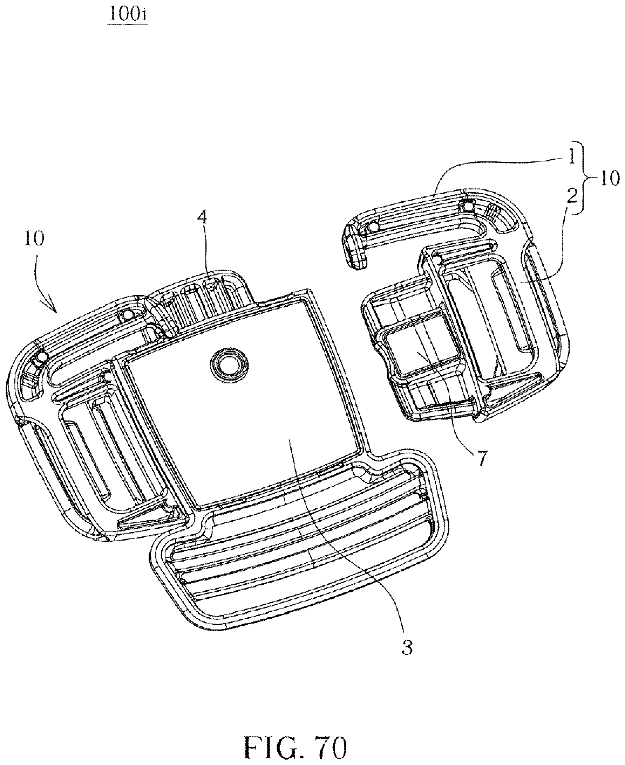

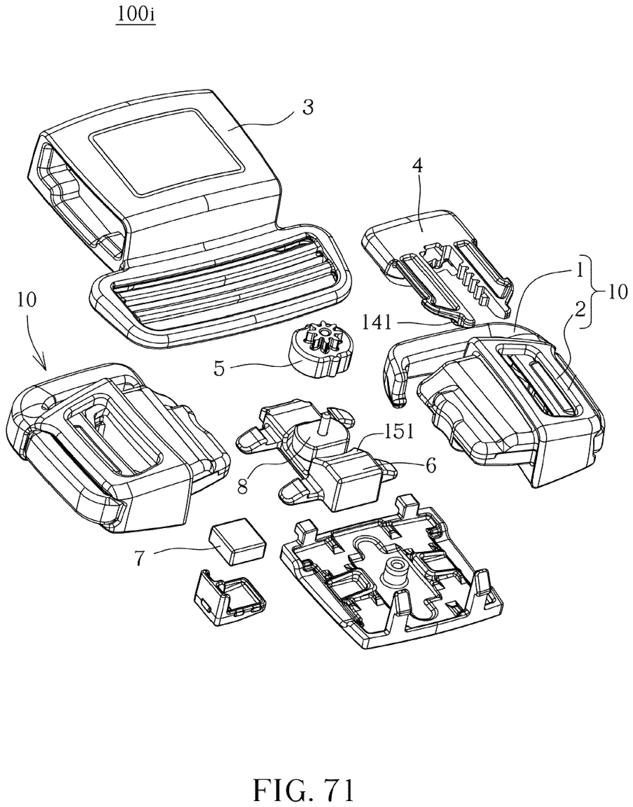

Please refer to FIG. 69 to FIG. 71. FIG. 69 is a schematic diagram of a magnetic buckle assembly 100i according to some embodiments of the present disclosure. FIG. 70 is a diagram of the magnetic buckle assembly 100i as one of the first buckle components 10 is detached according to some embodiments of the present disclosure. FIG. 71 is an exploded diagram of the magnetic buckle assembly 100i according to some embodiments of the present disclosure. As shown in FIG. 69 to FIG. 71, in some embodiments, similar to the magnetic buckle assembly 100g of the aforementioned embodiments, each first buckle component 10 includes the shoulder strap buckle 1 and the waist strap buckle 2. The shoulder strap buckle 1 and the waist strap buckle 2 are combined with each other to form a one-piece male buckle. The second buckle component 3 is a crotch strap buckle. The two first magnetic components 7 are disposed on the two first buckle components 10. The second magnetic component 8 is disposed on the switch 5 inside the second buckle component 3. The third magnetic component is omitted. Other structures of the magnetic buckle assembly 100i, e.g., structure for driving the latch 6 to disengage from the first buckle components 10, are similar to the ones of the magnetic buckle assembly 100d of the aforementioned embodiments. Detailed description thereof is omitted herein for simplicity.

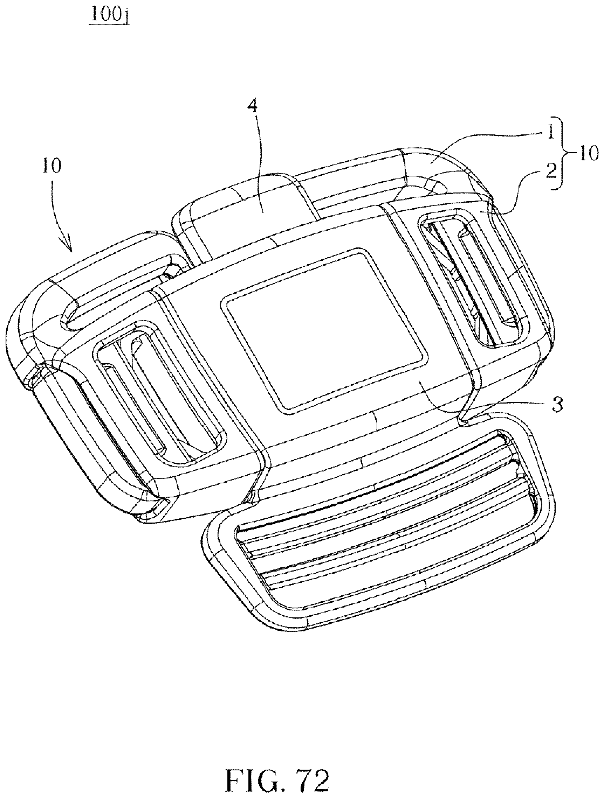

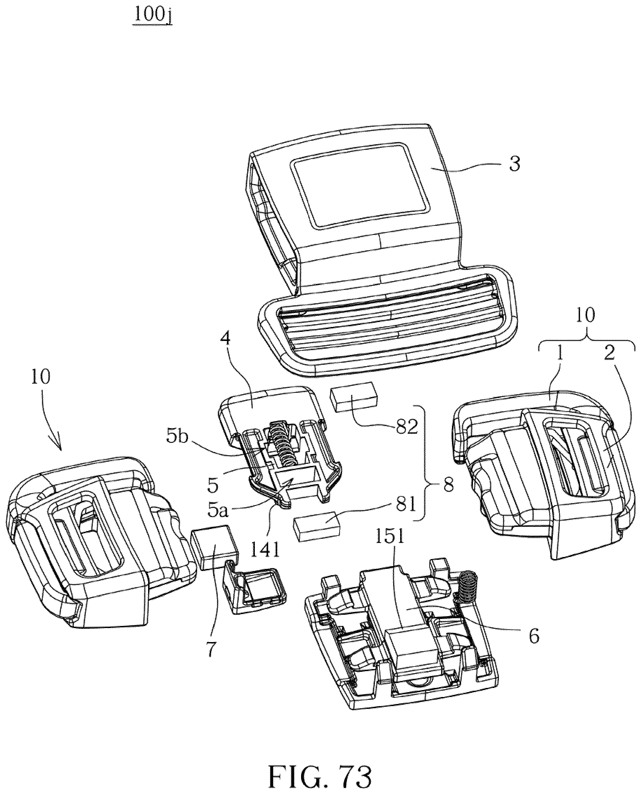

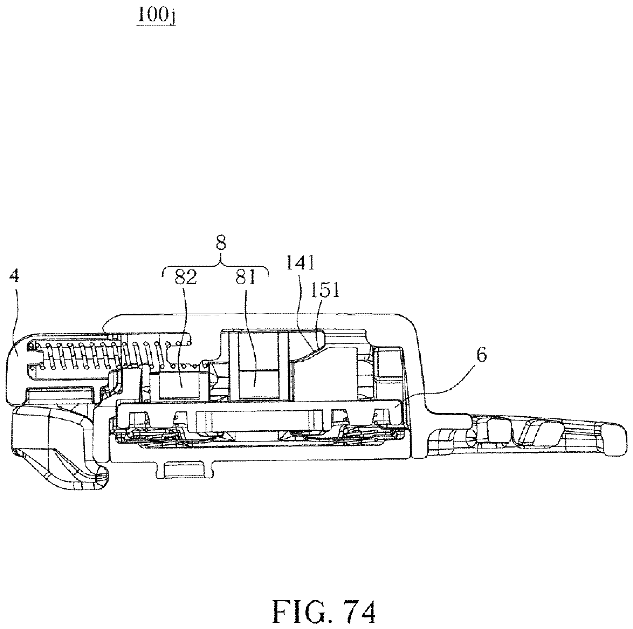

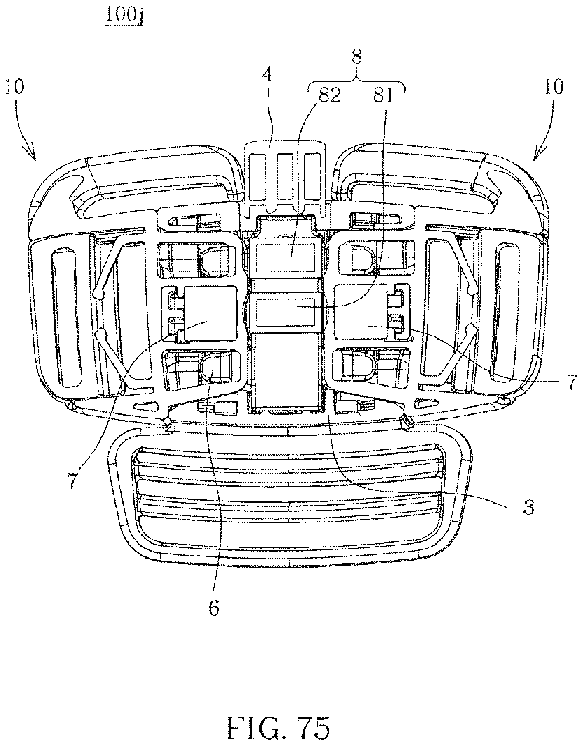

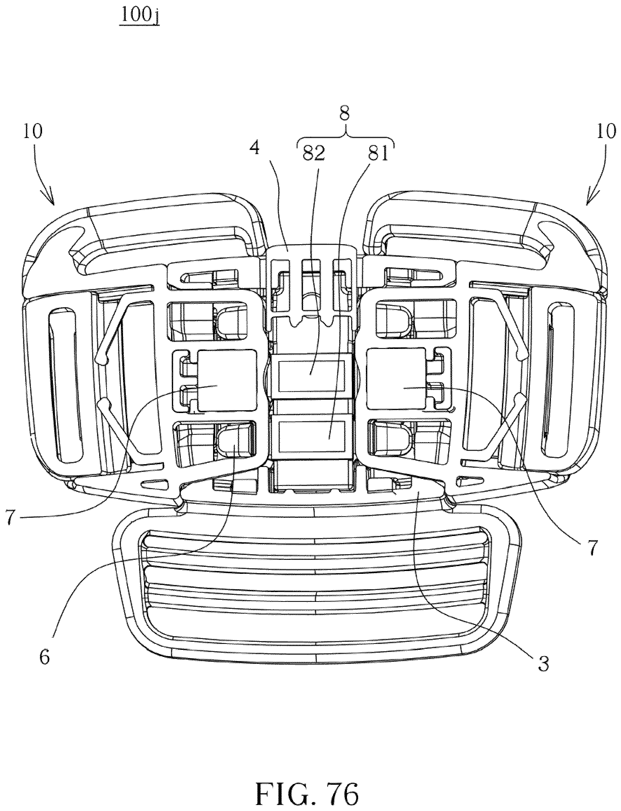

Please refer to FIG. 72 to FIG. 76. FIG. 72 is a schematic diagram of a magnetic buckle assembly 100j according to some embodiments of the present disclosure. FIG. 73 is an exploded diagram of the magnetic buckle assembly 100j according to some embodiments of the present disclosure. FIG. 74 is a sectional diagram of the magnetic buckle assembly 100j according to some embodiments of the present disclosure. FIG. 75 and FIG. 76 are diagrams of the magnetic buckle assembly 100j at different states according to some embodiments of the present disclosure. As shown in FIG. 72 to FIG. 76, in some embodiments, similar to the magnetic buckle assembly 100g of the aforementioned embodiments, each first buckle component 10 includes the shoulder strap buckle 1 and the waist strap buckle 2. The shoulder strap buckle 1 and the waist strap buckle 2 are combined with each other to form a one-piece male buckle. The second buckle component 3 is a crotch strap buckle. The two first magnetic components 7 are disposed on the two first buckle components 10. The third magnetic component is omitted. Different from the magnetic buckle assembly 100g of the aforementioned embodiments, the switch 5 is fixedly connected to the operating component 4, and the second magnetic component 8 is disposed on the switch 5 and slidable along with the operating component 4. The second magnetic component 8 includes a first magnetic part 8a and a second magnetic part 8b disposed inside a first chamber 5a and a second chamber 5b formed on the switch 5. The first magnetic part 8a is for magnetically attracting the two first magnetic components 7, and the second magnetic part 8b is for magnetically repelling the two first magnetic components 7. In some embodiments, the first magnetic part 8a and the second magnetic part 8b are separated parts. However, in another embodiment, the first magnetic part and the second magnetic part can be integrally formed.

When the operating component 4 is released and recovered to a position as shown in FIG. 75, the first magnetic part 8a is aligned with the two first magnetic components 7 to magnetically attract the two first magnetic components 7 for facilitating the mating of the two first buckle components 10 and the second buckle component 3. When the operating component is operated to slide to a position as shown in FIG. 76, the second magnetic part 8b is aligned with the two first magnetic components 7 to magnetically repel the two first magnetic components 7 for facilitating the separation of the two first buckle components 10 and the second buckle component 3. Other Structures of the magnetic buckle assembly 100j of the aforementioned embodiments are similar to the ones of the magnetic buckle assembly 100d of the aforementioned embodiments. Detailed description is omitted herein for simplicity.

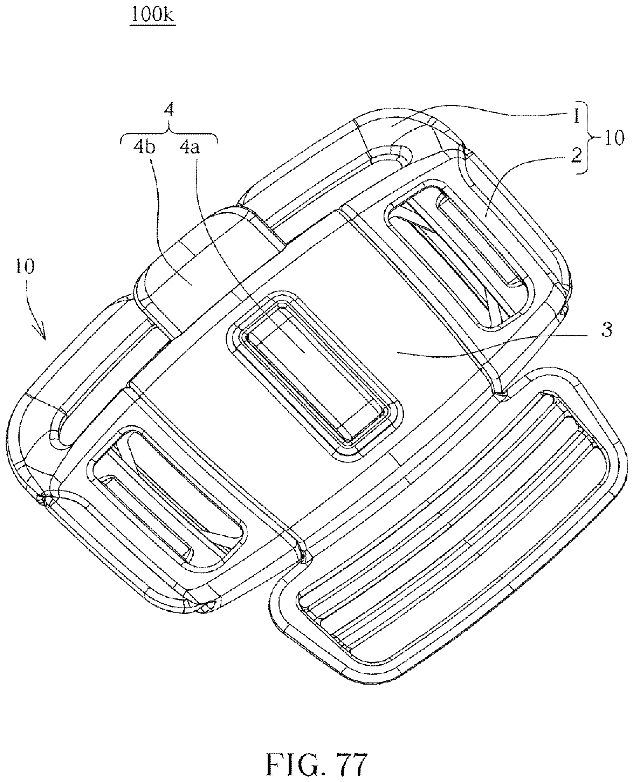

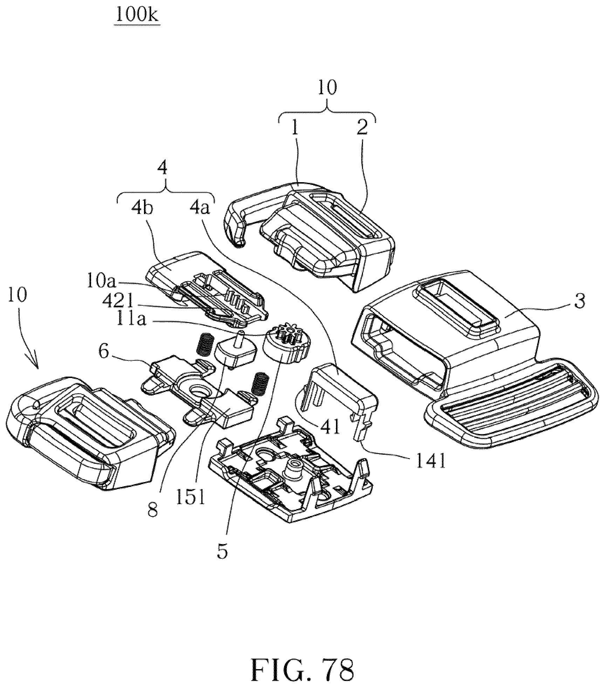

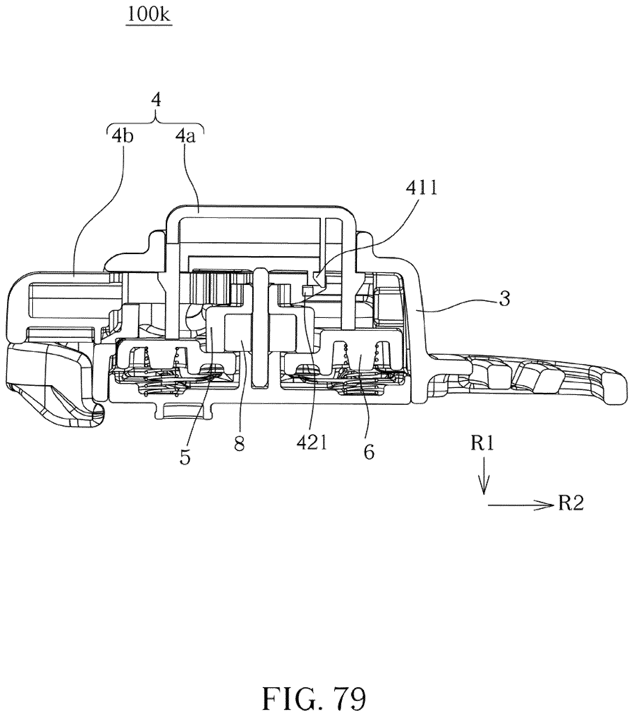

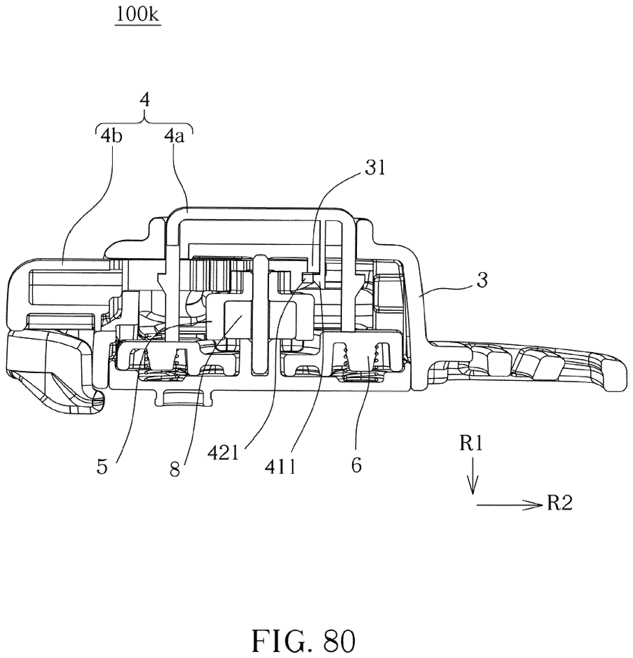

Please refer to FIG. 77 to FIG. 80. FIG. 77 is a schematic diagram of a magnetic buckle assembly 100k according to some embodiments of the present disclosure. FIG. 78 is an exploded diagram of the magnetic buckle assembly 100k according to some embodiments of the present disclosure. FIG. 79 and FIG. 80 are diagrams of the magnetic buckle assembly 100k at different states according to some embodiments of the present disclosure. As show in FIG. 77 to FIG. 80, in some embodiments, similar to the magnetic buckle assembly 100g of the aforementioned embodiments, each first buckle component 10 includes the shoulder strap buckle 1 and the waist strap buckle 2. The shoulder strap buckle 1 and the waist strap buckle 2 are combined with each other to form a one-piece male buckle. The second buckle component 3 is a crotch strap buckle. The two first magnetic components, which are not shown in the figures, are disposed on the two first buckle components 10. The second magnetic component 8 is disposed on the switch 5 inside the second buckle component 3. The third magnetic component is omitted. Different from the magnetic buckle assembly 100g of the aforementioned embodiments, the operating component 4 includes a first operating part 4a and a second operating part 4b. The first operating part 4a is for driving the latch 6 to disengage from the two first buckle component 10. The second operating part 4b is for driving the switch 5 to reverse the direction of the magnetic field of the second magnetic component 8.

Specifically, the first operating part 4a and the second operating part 4b are slidably disposed on the second buckle component 3 and can be operated to slide individually. In some embodiments, a sliding direction of the first operating part 4a can be parallel to the front-rear direction, and a sliding direction of the second operating part 4b can be perpendicular to the sliding direction of the first operating part 4a. The driving cooperating structure 141 is formed on the first operating part 4a of the operating component 4 for cooperating with the driven cooperating structure 151 formed on the latch 6. The driving structure 10a is formed on the second operating part 4b of the operating component 4 for cooperating with the driven structure 11a formed on the switch 5. A retaining structure 411 is formed on the first operating part 4a to engage with a retaining engaging portion 31 formed on the second buckle component 3. A releasing structure 421 is formed on the second operating part 4b to disengage the retaining structure 411 from the second buckle component 3.

When the first operating part 4a is operated to slide from a position as shown in FIG. 79 to a position as shown in FIG. 80 along a first operating direction R1 to disengage the latch 6 from the two first buckle components 10, the retaining structure 411 can engages with the retaining engaging portion 31 to retain the first operating part 4a at the position as shown in FIG. 80. After the first operating part 4a is retained by engagement of the retaining structure 411 and the retaining engaging portion 41, the first operating part 4a can be released, and then the second operating part 4b can be operated to slide. When the second operating part 4b is operated to slide along a second operating direction R2 perpendicular to the first operating direction R1 to drive the switch 5 to reverse the direction of the magnetic field of the second magnetic component 8, the releasing structure 421 can disengage the retaining structure 411 from the retaining engaging portion 31 on the second buckle component 3 to allow the first operating part 4a to be recovered upwardly, e.g., by an elastic component. In other words, the magnetic buckle assembly 100k offers a two-stage separation operation for preventing unintentional separation of the first buckle components 10 and the second buckle component 3, and the user can release the first operating part 4a after the first operating part 4a is operated to disengage the latch 6 from the two first buckle components 10, which brings convenience is use.

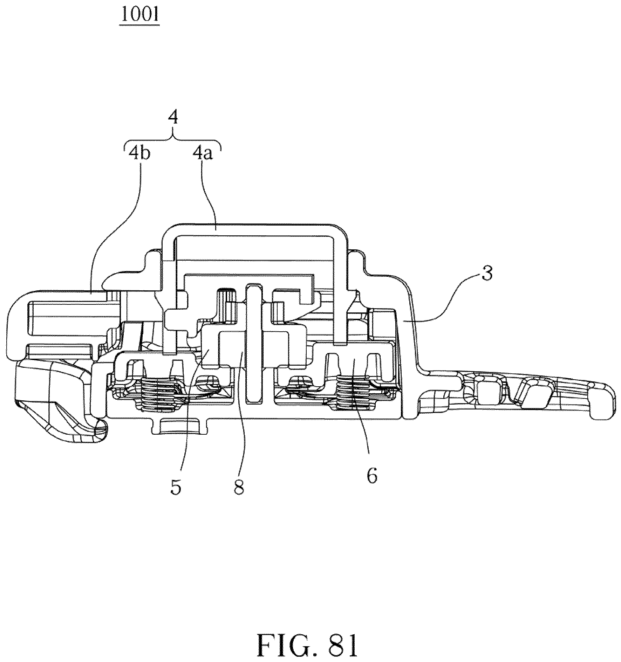

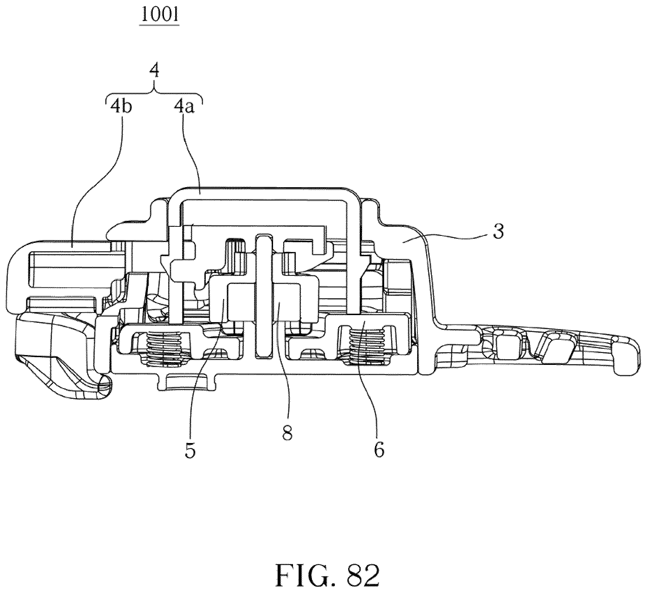

However, the present disclosure is not limited to aforementioned embodiments. For example, please refer to FIG. 81 and FIG. 82. FIG. 81 and FIG. 82 are diagrams of a magnetic buckle assembly 1001 according to some embodiments of the present disclosure. As shown in FIG. 81 and FIG. 82, in some embodiments, there is no retaining structure formed on the first operating part 4a, so that the first operating part 4a cannot be retained when the first operating part 4a is operated to slide to disengage the latch 6 from the two first buckle components, which are not shown in the figures. In other words, in some embodiments, the user can use two hands or two fingers to operate the first operating part 4a and the second operating part 4b without releasing the first operating part 4a to achieve the separation of the two first buckle components 10 and the second buckle component 3.

Furthermore, understandably, the configuration of the first magnetic component and the second magnetic component of any one of the magnetic buckle assemblies 100c to 100i and 100j to 100k of the aforementioned embodiments is similar to the one shown in FIG. 12 to FIG. 14 and can be replaced by the one shown in FIG. 23 to FIG. 25 or FIG. 26 to FIG. 28.

In contrast to the prior art, the magnetic buckle assembly of the present disclosure utilizes cooperation of the operating component, the switch, the latch, the first magnetic component and the second magnetic component to change the direction of the magnetic force the second magnetic component acting on the first magnetic component by rotating the switch when the operating component is operated to disengage the latch from the first buckle component. Therefore, the first magnetic component and the second magnetic component can be configured to magnetically attract each other when the first buckle component is mated with the second buckle component. The first magnetic component and the second magnetic component can magnetically repel each other when the operating component is operated to disengage the latch from the first buckle component for allowing separation of the first buckle component and the second buckle component, which facilitates not only a mating operation of the magnetic buckle assembly but also a separating operation of the magnetic buckle assembly. Understandably, the first magnetic component and the second magnetic component also can be configured to magnetically repel each other when the first buckle component is mated with the second buckle component, and the first magnetic component and the second magnetic component can magnetically attract each other when the operating component is operated to disengage the latch from the first buckle component, which prevents an unintentional separation of first buckle component and the second buckle component.

Those skilled in the art will readily observe that numerous modifications and alterations of the device and method may be made while retaining the teachings of the disclosure. Accordingly, the scope of protection is defined by the appended claims.

## Claims

1. A magnetic buckle assembly (100a-100l) comprising:
at least one first buckle component (10); and
a second buckle component (3) for mating with the at least one first buckle component (10);
**characterized in that** the magnetic buckle assembly (100a-100l) further comprises:
a switch (5) movably disposed on the second buckle component (3);
an operating component (4) linked to the switch (5);
at least one first magnetic component (7) disposed on the first buckle component (10);
a second magnetic component (7) disposed on the switch (5) and for magnetically attracting or repelling the at least one first magnetic component (7); and
at least one latch (6) movably disposed on the second buckle component (3) and for engaging with the at least one first buckle component (10), the at least one latch (6) moving along with movement of the operating component (4) or movement of the switch (5);
wherein the operating component (4) drives the switch (5) to move to change a direction of a magnetic force of the second magnetic component (7) acting on the first magnetic component (7) when the operating component (4) is operated to disengage the at least one latch (6) from the at least one first buckle component (10).

2. The magnetic buckle assembly (100a-100l) of claim 1, **characterized in that** the at least one first magnetic component (7) magnetically attracts the second magnetic component (7) during a mating process of the at least one first buckle component (10) and the second buckle component (3).

3. The magnetic buckle assembly (100a-100i, 100k, 1001) of any one of claims 1 or 2, **characterized in that** the switch (5) is rotatably disposed on the second buckle component (3) around a rotating axis (L), and the operating component (4) is movably connected or fixedly connected to the switch (5).

4. The magnetic buckle assembly (100a, 100c-100i, 100k, 1001) of claim 3, **characterized in that** the operating component (4) is slidably disposed on the second buckle component (3), and the switch (5) rotates around the rotating axis (L) along with sliding movement of the operating component (4); and/or
**characterized in that** the operating component (4) is slidably disposed on a front wall or a lateral wall of the second buckle component (3).

5. The magnetic buckle assembly (100a, 100c-100i, 100k, 1001) any one of claims 3 or 4, **characterized in that** a driving structure (10a, 10b) is formed on the operating component (4), a driven structure (11a, 11b) is formed on the switch (5), and the operating component (4) drives the switch (5) to rotate around the rotating axis (L).

6. The magnetic buckle assembly (100a, 100d-100i, 100k, 1001) of claim 5, **characterized in that** the driving structure (10a) is a gear rack structure arranged along a sliding direction of the operating component (4), and the driven structure (11a) is a gear wheel structure for rotatably engaging with the gear rack structure; and/or
**characterized in that** one of the driving structure (10b) and the driven structure (11b) is a slot structure, and another one of the driving structure (10b) and the driven structure (11b) is a column structure slidably disposed inside the slot structure and offset from the rotating axis (L).

7. The magnetic buckle assembly (100b) of claims 3 to 6, **characterized in that** a connecting chamber (41) is formed on the operating component (4) and comprises a connecting opening facing toward the switch (5), an end portion of the switch (5) covers the connecting opening, and the second magnetic component (7) is partially located inside the connecting chamber (41).

8. The magnetic buckle assembly (100b) of claim 7, further **characterized by** a connecting component (12) connected to the operating component (4) and the switch (5) along the rotating axis (L); and/or
**characterized in that** an accommodating chamber (52) is formed on the end portion of the switch (5), the accommodating chamber (52) comprises an accommodating opening facing toward the connecting chamber (41) and communicated with the connecting chamber (41), and the connecting chamber (41) and the accommodating chamber (52) cooperatively accommodate the second magnetic component (7).

9. The magnetic buckle assembly (100a, 100c-100i, 100k, 1001) of any one of claims 3 to 8, further **characterized by** a first resilient component (13a) disposed between the operating component (4) and the second buckle component (3) for driving the operating component (4) to recover; and/or
further **characterized by** a first resilient component (13b) disposed between the switch (5) and the second buckle component (3) for driving the switch (5) and the operating component (4) to recover.

10. The magnetic buckle assembly (100a-100l) of any one of claims 1 to 9, **characterized in that** the operating component (4) drives the at least one latch (6) to disengage from the at least one first buckle component (10) directly or by the switch (5) indirectly.

11. The magnetic buckle assembly (100a-100l) of claim 10, **characterized in that** a locking structure (61) is formed on the at least one latch (6), and a locked structure (103) is formed on the at least one first buckle component (10) and for cooperating with the locking structure (61).

12. The magnetic buckle assembly (100a-100l) of claim 11, **characterized in that** a driven cooperating structure (151) is formed on the at least one latch (6), at least one driving cooperating structure (141) is formed on the switch (5) or the operating component (4), the at least one latch (6) is slidably disposed on the second buckle component (3), the one of the switch (5) and the operating component (4) drives the at least one latch (6) to slide by cooperation of the at least one driving cooperating structure (141) and the driven cooperating structure (151) to disengage the locking structure (61) from the locked structure (103).

13. The magnetic buckle assembly (100a, 100c-100l) of claim 12, **characterized in that** the at least one driving cooperating structure (141) is a first inclined surface structure formed on the operating component (4) and inclined relative to a sliding direction of the at least one latch (6), and the driven cooperating structure (151) is a second inclined surface structure; and/or
**characterized in that** the switch (5) is rotatably disposed on the second buckle component (3) around a rotating axis (L), the at least one driving cooperating structure (142) is a first helical surface structure formed on the switch (5), a central axis of the first helical surface structure coincides with the rotating axis (L), and the driven cooperating structure (152) is a second helical surface structure; and/or
**characterized in that** one of the at least one driving cooperating structure (142) and the driven cooperating structure (152) is a first helical surface structure, and another one of the at least one driving cooperating structure (142) and the driven cooperating structure (152) is a protrusion slidable along the first helical surface structure; and/or
**characterized in that** the at least one driving cooperating structure (142) is formed on an end portion of the switch (5) facing toward the at least one latch (6).

14. The magnetic buckle assembly (100a-100l) of any one of claims 1 to 13, **characterized in that** the switch (5) is rotatably disposed on the second buckle component (3) around a rotating axis (L), the magnetic force of the second magnetic component (7) acting on the at least one first magnetic component (7) is changed from a magnetic attracting force to a magnetic repelling force or from the magnetic repelling force to the magnetic attracting force when the switch (5) is rotated over a predetermined angle.

15. The magnetic buckle assembly (100a-100l) of claim 14, **characterized in that** the predetermined angle is 45 or 90 degrees.

## Patentansprüche

1. Magnetische Schnallenanordnung (100a-100l), umfassend:
mindestens eine erste Schnallenkomponente (10); und
eine zweite Schnallenkomponente (3), die mit der mindestens einen ersten Schnallenkomponente (10) zusammenpasst;
**dadurch gekennzeichnet, dass** die magnetische Schnallenanordnung (100a-100l) ferner umfasst:
einen Schalter (5), der beweglich auf der zweiten Schnallenkomponente (3) angeordnet ist;
ein Bedienelement (4), das mit dem Schalter (5) verbunden ist;
mindestens eine erste magnetische Komponente (7), die auf der ersten Schnallenkomponente (10) angeordnet ist;
eine zweite magnetische Komponente (7), die auf dem Schalter (5) angeordnet ist und die mindestens eine erste magnetische Komponente (7) magnetisch anzieht oder abstößt; und
mindestens einen Riegel (6), der beweglich an der zweiten Schnallenkomponente (3) angeordnet ist und in die mindestens eine erste Schnallenkomponente (10) eingreift, wobei sich der mindestens eine Riegel (6) mit der Bewegung des Bedienelements (4) oder der Bewegung des Schalters (5) bewegt;
wobei das Bedienelement (4) den Schalter (5) antreibt, sich zu bewegen, um eine Richtung einer magnetischen Kraft der zweiten magnetischen Komponente (7) zu ändern, die auf die erste magnetische Komponente (7) wirkt, wenn das Bedienelement (4) betätigt wird, um den mindestens einen Riegel (6) von der mindestens einen ersten Schnallenkomponente (10) zu lösen.

2. Magnetische Schnallenanordnung (100a-100l) nach Anspruch 1,
**dadurch gekennzeichnet, dass** die mindestens eine erste magnetische Komponente (7) die zweite magnetische Komponente (7) während eines Verbindungsvorgangs der mindestens einen ersten Schnallenkomponente (10) und der zweiten Schnallenkomponente (3) magnetisch anzieht.

3. Magnetische Schnallenanordnung (100a-100i, 100k, 100l) nach einem der Ansprüche 1 oder 2, **dadurch gekennzeichnet, dass** der Schalter (5) um eine Drehachse (L) drehbar auf der zweiten Schnallenkomponente (3) angeordnet ist und das Bedienelement (4) mit dem Schalter (5) beweglich oder fest verbunden ist.

4. Magnetische Schnallenanordnung (100a, 100c-100i, 100k, 100l) nach Anspruch 3, **dadurch gekennzeichnet, dass** das Bedienelement (4) verschiebbar auf der zweiten Schnallenkomponente (3) angeordnet ist und der Schalter (5) sich um die Drehachse (L) zusammen mit der Gleitbewegung des Bedienelements (4) dreht; und/oder
**dadurch gekennzeichnet, dass** das Bedienelement (4) auf einer Vorderwand oder einer Seitenwand der zweiten Schnallenkomponente (3) verschiebbar angeordnet ist.

5. Magnetische Schnallenanordnung (100a, 100c-100i, 100k, 100l) nach einem der Ansprüche 3 oder 4, **dadurch gekennzeichnet, dass** eine Antriebsstruktur (10a, 10b) an der Bedienungskomponente (4) ausgebildet ist, eine angetriebene Struktur (11a, 11b) an dem Schalter (5) ausgebildet ist und das Bedienelement (4) den Schalter (5) zur Drehung um die Drehachse (L) antreibt.

6. Magnetische Schnallenanordnung (100a, 100d-100i, 100k, 100l) nach Anspruch 5, **dadurch gekennzeichnet, dass** die Antriebsstruktur (10a) eine Zahnstangenstruktur ist, die entlang einer Gleitrichtung des Bedienelements (4) angeordnet ist, und die angetriebene Struktur (11a) eine Zahnradstruktur zum drehbaren Eingriff mit der Zahnstangenstruktur ist; und/oder
**dadurch gekennzeichnet, dass** eine von der antreibenden Struktur (10b) und der angetriebenen Struktur (11b) eine Schlitzstruktur ist und eine andere der antreibenden Struktur (10b) und der angetriebenen Struktur (11b) eine Säulenstruktur ist, die verschiebbar innerhalb der Schlitzstruktur und versetzt von der Drehachse (L) angeordnet ist.

7. Magnetische Schnallenanordnung (100b) nach einem der Ansprüche 3 bis 6, **dadurch gekennzeichnet, dass** an dem Bedienelement (4) eine Verbindungskammer (41) ausgebildet ist, die eine dem Schalter (5) zugewandte Verbindungsöffnung aufweist, ein Endabschnitt des Schalters (5) die Verbindungsöffnung abdeckt und die zweite magnetische Komponente (7) teilweise innerhalb der Verbindungskammer (41) angeordnet ist.

8. Magnetische Schnallenanordnung (100b) nach Anspruch 7, ferner **gekennzeichnet durch** eine Verbindungskomponente (12), die mit dem Bedienelement (4) und dem Schalter (5) entlang der Drehachse (L) verbunden ist; und/oder
**dadurch gekennzeichnet, dass** eine Aufnahmekammer (52) an dem Endabschnitt des Schalters (5) ausgebildet ist, wobei die Aufnahmekammer (52) eine Aufnahmeöffnung aufweist, die der Verbindungskammer (41) zugewandt ist und mit der Verbindungskammer (41) in Verbindung steht, und die Verbindungskammer (41) und die Aufnahmekammer (52) zusammenwirkend die zweite magnetische Komponente (7) aufnehmen.

9. Magnetische Schnallenanordnung (100a, 100c-100i, 100k, 100l) nach einem der Ansprüche 3 bis 8, ferner **gekennzeichnet durch** eine erste elastische Komponente (13a), die zwischen dem Bedienelement (4) und der zweiten Schnallenkomponente (3) angeordnet ist, um das Bedienelement (4) zur Rückstellung zu bewegen; und/oder
ferner **gekennzeichnet durch** eine erste elastische Komponente (13b), die zwischen dem Schalter (5) und der zweiten Schnallenkomponente (3) angeordnet ist, um den Schalter (5) und das Bedienelement (4) zur Rückstellung zu bewegen.

10. Magnetische Schnallenanordnung (100a-100l) nach einem der Ansprüche 1 bis 9, **dadurch gekennzeichnet, dass** das Bedienelement (4) die mindestens einen Riegel (6) direkt oder indirekt über den Schalter (5) zum Lösen von der mindestens einen ersten Schnallenkomponente (10) antreibt.

11. Magnetische Schnallenanordnung (100a-100l) nach Anspruch 10,
**dadurch gekennzeichnet, dass** eine Verriegelungsstruktur (61) an dem mindestens einen Riegel (6) ausgebildet ist und eine Verriegelungsstruktur (103) an der mindestens einen ersten Schnallenkomponente (10) ausgebildet ist, die mit der Verriegelungsstruktur (61) zusammenwirkt.

12. Magnetische Schnallenanordnung (100a-100l) nach Anspruch 11,
**dadurch gekennzeichnet, dass** eine angetriebene zusammenwirkende Struktur (151) an der mindestens ein Riegel (6) ausgebildet ist, mindestens eine antreibende zusammenwirkende Struktur (141) an dem Schalter (5) oder dem Bedienelement (4) ausgebildet ist, der mindestens eine Riegel (6) verschiebbar an der zweiten Schnallenkomponente (3) angeordnet ist, entweder der Schalter (5) oder das Bedienelement (4) den mindestens einen Riegel (6) antreibt, um durch Zusammenwirken der mindestens einen antreibenden zusammenwirkenden Struktur (141) und der angetriebenen zusammenwirkenden Struktur (151) zu gleiten, um die Verriegelungsstruktur (61) von der verriegelten Struktur (103) zu lösen.

13. Magnetische Schnallenanordnung (100a, 100c-100l) nach Anspruch 12, **dadurch gekennzeichnet, dass** die mindestens eine antreibende zusammenwirkende Struktur (141) eine erste geneigte Oberflächenstruktur ist, die auf dem Bedienelement (4) ausgebildet ist und relativ zu einer Gleitrichtung des mindestens einen Riegels (6) geneigt ist, und die angetriebene zusammenwirkende Struktur (151) eine zweite geneigte Oberflächenstruktur ist; und/oder
**dadurch gekennzeichnet, dass** der Schalter (5) drehbar auf der zweiten Schnallenkomponente (3) um eine Drehachse (L) angeordnet ist, die mindestens eine antreibende zusammenwirkende Struktur (142) eine erste schraubenförmige Oberflächenstruktur ist, die auf dem Schalter (5) ausgebildet ist, wobei eine Mittelachse der ersten schraubenförmigen Oberflächenstruktur mit der Drehachse (L) zusammenfällt, und die angetriebene zusammenwirkende Struktur (152) eine zweite schraubenförmige Oberflächenstruktur ist; und/oder
**dadurch gekennzeichnet, dass** eine von der mindestens einen antreibenden zusammenwirkenden Struktur (142) und der angetriebenen zusammenwirkenden Struktur (152) eine erste schraubenförmige Oberflächenstruktur ist und eine andere von der mindestens einen antreibenden zusammenwirkenden Struktur (142) und der angetriebenen zusammenwirkenden Struktur (152) ein entlang der ersten schraubenförmigen Oberflächenstruktur verschiebbarer Vorsprung ist; und/oder
**dadurch gekennzeichnet, dass** die mindestens eine antreibende zusammenwirkende Struktur (142) an einem Endabschnitt des Schalters (5) ausgebildet ist, der dem mindestens einen Riegel (6) zugewandt ist.

14. Magnetische Schnallenanordnung (100a-100l) nach einem der Ansprüche 1 bis 13, **dadurch gekennzeichnet, dass** der Schalter (5) auf der zweiten Schnallenkomponente (3) um eine Drehachse (L) drehbar angeordnet ist, wobei die Magnetkraft der zweiten magnetischen Komponente (7), die auf die mindestens eine erste magnetische Komponente (7) wirkt, von einer magnetischen Anziehungskraft zu einer magnetischen Abstoßungskraft oder von der magnetischen Abstoßungskraft zu der magnetischen Anziehungskraft geändert wird, wenn der Schalter (5) über einen vorgegebenen Winkel gedreht wird.

15. Magnetische Schnallenanordnung (100a-100l) nach Anspruch 14,
**dadurch gekennzeichnet, dass** der vorbestimmte Winkel 45 oder 90 Grad beträgt.

## Revendications

1. Assemblage de boucle magnétique (100a-100l) comprenant :
au moins un premier composant de boucle (10) ; et
un second composant de boucle (3) destiné à être accouplé avec l'au moins un premier composant de boucle (10) ;
**caractérisé en ce que** l'assemblage de boucle magnétique (100a-100l) comprend en outre :
un bouton commutateur (5) qui est disposé de façon mobile sur le second composant de boucle (3) ;
un composant d'actionnement (4) qui est lié au bouton commutateur (5) ;
au moins un premier composant magnétique (7) qui est disposé sur le premier composant de boucle (10) ;
un second composant magnétique (7) qui est disposé sur le bouton commutateur (5) et qui est destiné à attirer magnétiquement ou à repousser magnétiquement l'au moins un premier composant magnétique (7) ; et
au moins un moyen de verrouillage (6) qui est disposé de façon mobile sur le second composant de boucle (3) et qui est destiné à être engagé avec l'au moins un premier composant de boucle (10), l'au moins un moyen de verrouillage (6) pouvant être déplacé en association avec le déplacement du composant d'actionnement (4) ou en association avec le déplacement du bouton commutateur (5) ;
dans lequel le composant d'actionnement (4) entraîne le bouton commutateur (5) de telle sorte qu'il soit déplacé dans le but de modifier une direction d'une force magnétique du second composant magnétique (7) qui opère sur le premier composant magnétique (7) lorsque le composant d'actionnement (4) est actionné pour désengager l'au moins un moyen de verrouillage (6) vis-à-vis de l'au moins un premier composant de boucle (10).

2. Assemblage de boucle magnétique (100a-100l) selon la revendication 1, **caractérisé en ce que** l'au moins un premier composant magnétique (7) attire magnétiquement le second composant magnétique (7) pendant un processus d'accouplement de l'au moins un premier composant de boucle (10) et du second composant de boucle (3).

3. Assemblage de boucle magnétique (100a-100i, 100k, 100l) selon l'une quelconque des revendications 1 ou 2, **caractérisé en ce que** le bouton commutateur (5) est disposé à rotation sur le second composant de boucle (3) autour d'un axe de rotation (L), et le composant d'actionnement (4) est connecté de façon mobile ou est connecté de façon fixe avec le bouton commutateur (5).

4. Assemblage de boucle magnétique (100a, 100c-100i, 100k, 100l) selon la revendication 3, **caractérisé en ce que** le composant d'actionnement (4) est disposé de façon coulissante sur le second composant de boucle (3), et le bouton commutateur (5) tourne autour de l'axe de rotation (L) en association avec le déplacement par coulissement du composant d'actionnement (4) ; et/ou
**caractérisé en ce que** le composant d'actionnement (4) est disposé de façon coulissante sur une paroi avant ou sur une paroi latérale du second composant de boucle (3).

5. Assemblage de boucle magnétique (100a, 100c-100i, 100k, 100l) selon l'une quelconque des revendications 3 ou 4, **caractérisé en ce qu'**une structure d'entraînement (10a, 10b) est formée sur le composant d'actionnement (4), une structure entraînée (11a, 11b) est formée sur le bouton commutateur (5), et le composant d'actionnement (4) entraîne le bouton commutateur (5) en rotation autour de l'axe de rotation (L).

6. Assemblage de boucle magnétique (100a, 100d-100i, 100k, 100l) selon la revendication 5, **caractérisé en ce que** : la structure d'entraînement (10a) est une structure à crémaillère qui est agencée suivant une direction de coulissement du composant d'actionnement (4), et la structure entraînée (11a) est une structure à pignon qui est destinée à être engagée à rotation avec la structure à crémaillère ; et/ou
**caractérisé en ce qu'**une structure constitutive prise parmi la structure d'entraînement (10b) et la structure entraînée (11b) est une structure à fente(s), et l'autre structure constitutive prise parmi la structure d'entraînement (10b) et la structure entraînée (11b) est une structure à colonne(s) qui est disposée de façon coulissante à l'intérieur de la structure à fente(s) et qui est décalée par rapport à l'axe de rotation (L).

7. Assemblage de boucle magnétique (100b) selon les revendications 3 à 6, **caractérisé en ce qu'**une chambre de connexion (41) est formée sur le composant d'actionnement (4) et elle comprend une ouverture de connexion qui est orientée en direction du bouton commutateur (5), une partie d'extrémité du bouton commutateur (5) recouvre l'ouverture de connexion et le second composant magnétique (7) est partiellement localisé à l'intérieur de la chambre de connexion (41).

8. Assemblage de boucle magnétique (100b) selon la revendication 7, **caractérisé en outre par** un composant de connexion (12) qui est connecté au composant d'actionnement (4) et au bouton commutateur (5) suivant l'axe de rotation (L) ; et/ou
**caractérisé en ce qu'**une chambre de logement (52) est formée sur la partie d'extrémité du bouton commutateur (5), la chambre de logement (52) comprend une ouverture de logement qui est orientée en direction de la chambre de connexion (41) et qui communique avec la chambre de connexion (41), et la chambre de connexion (41) et la chambre de logement (52) logent en coopération le second composant magnétique (7).

9. Assemblage de boucle magnétique (100a, 100c-100i, 100k, 100l) selon l'une quelconque des revendications 3 à 8, **caractérisé en outre par** un premier composant élastique à effet de ressort (13a) qui est disposé entre le composant d'actionnement (4) et le second composant de boucle (3) pour entraîner le composant d'actionnement (4) de telle sorte qu'il soit restauré en termes de position ; et/ou
**caractérisé en outre par** un premier composant élastique à effet de ressort (13b) qui est disposé entre le bouton commutateur (5) et le second composant de boucle (3) pour entraîner le bouton commutateur (5) et le composant d'actionnement (4) de telle sorte qu'ils soient restaurés en termes de positions.

10. Assemblage de boucle magnétique (100a-100l) selon l'une quelconque des revendications 1 à 9, **caractérisé en ce que** le composant d'actionnement (4) entraîne l'au moins un moyen de verrouillage (6) de telle sorte qu'il soit désengagé de l'au moins un premier composant de boucle (10) de façon directe ou de façon indirecte au moyen du bouton commutateur (5).

11. Assemblage de boucle magnétique (100a-100l) selon la revendication 10, **caractérisé en ce qu'**une structure de blocage (61) est formée sur l'au moins un moyen de verrouillage (6), et une structure bloquée (103) est formée sur l'au moins un premier composant de boucle (10) et elle est destinée à coopérer avec la structure de blocage (61).

12. Assemblage de boucle magnétique (100a-100l) selon la revendication 11, **caractérisé en ce qu'**une structure de coopération entraînée (151) est formée sur l'au moins un moyen de verrouillage (6), au moins une structure de coopération d'entraînement (141) est formée sur le bouton commutateur (5) ou sur le composant d'actionnement (4), l'au moins un moyen de verrouillage (6) est disposé de façon coulissante sur le second composant de boucle (3), un élément constitutif pris parmi le bouton commutateur (5) et le composant d'actionnement (4) entraîne l'au moins un moyen de verrouillage (6) de telle sorte qu'il coulisse au moyen d'une coopération de l'au moins une structure de coopération d'entraînement (141) et de la structure de coopération entraînée (151) afin de désengager la structure de blocage (61) vis-à-vis de la structure bloquée (103).

13. Assemblage de boucle magnétique (100a, 100c-100l) selon la revendication 12, **caractérisé en ce que** l'au moins une structure de coopération d'entraînement (141) est une première structure à surface inclinée qui est formée sur le composant d'actionnement (4) et qui est inclinée par rapport à une direction de coulissement de l'au moins un moyen de verrouillage (6), et la structure de coopération entraînée (151) est une seconde structure à surface inclinée ; et/ou
**caractérisé en ce que** le bouton commutateur (5) est disposé à rotation sur le second composant de boucle (3) autour d'un axe de rotation (L), l'au moins une structure de coopération d'entraînement (142) est une première structure à surface hélicoïdale qui est formée sur le bouton commutateur (5), un axe central de la première structure à surface hélicoïdale coïncide avec l'axe de rotation (L) et la structure de coopération entraînée (152) est une seconde structure à surface hélicoïdale ; et/ou
**caractérisé en ce qu'**une structure constitutive prise parmi l'au moins une structure de coopération d'entraînement (142) et la structure de coopération entraînée (152) est une première structure à surface hélicoïdale et l'autre structure constitutive prise parmi l'au moins une structure de coopération d'entraînement (142) et la structure de coopération entraînée (152) est une protubérance qui peut coulisser le long de la première structure à surface hélicoïdale ; et/ou
**caractérisé en ce que** l'au moins une structure de coopération d'entraînement (142) est formée sur une partie d'extrémité du bouton commutateur (5) qui est orientée en direction de l'au moins un moyen de verrouillage (6).

14. Assemblage de boucle magnétique (100a-100l) selon l'une quelconque des revendications 1 à 13, **caractérisé en ce que** le bouton commutateur (5) est disposé à rotation sur le second composant de boucle (3) autour d'un axe de rotation (L), la force magnétique du second composant magnétique (7) qui opère sur l'au moins un premier composant magnétique (7) est passée d'une force d'attraction magnétique à une force de répulsion magnétique ou de la force de répulsion magnétique à la force d'attraction magnétique lorsque le bouton commutateur (5) est tourné d'un angle prédéterminé.

15. Assemblage de boucle magnétique (100a-100l) selon la revendication 14, **caractérisé en ce que** l'angle prédéterminé est un angle de 45 degrés ou de 90 degrés.
